# EUROPEAN PATENT APPLICATION

(11) **EP 1 717 709 A1**
(43) Date of publication of application: **02.11.2006**
(21) Application number: 05703892.9
(22) Date of filing: 20.01.2005
(51) Int. Cl.: G06F 12/14, G06F 12/00, G11B 20/10, G11B 20/12, G11B 27/00

(54) **DATA CLEANING PROGRAM**

(30) Priority: 21.01.2004 JP 2004013600; 30.09.2004 JP 2004288742
(71) Applicant: Orient Instrument Computer Co., Ltd, Osaka-shi, Osaka 536-0014 (JP)
(72) Inventor: ITO, Tomoaki, Orient Instrument Computer Co. Ltd., Osaka-shi, Osaka 5360014 (JP)
(74) Representative: Paul, Dieter-Alfred
(86) International application number: PCT/JP2005/000664
(87) International publication number: WO 2005/071552

(57) **Abstract**

There is provided with a data cleaning program capable of deleting data recorded in a data recording medium so as not to be restored. Further, there is provided with a data cleaning program capable of making it impossible to read unnecessary data remaining in a data recording medium.

A part of an operating system 14 required for a cleaning operation and/or a data cleaning program 22 are saved into a main memory 3, so that the part of the operating system 14 and/or the program 22, both saved, write predetermined data over a recording area of a file specified to be cleaned.

All addresses of recording areas 14a of a FAT in which release codes are recorded are extracted, so that clusters 17a in the data area 17 corresponding to the extracted addresses are written over with desired dummy data.

## Description

### BACKGROUND OF THE INVENTION

### TECHNICAL FIELD

The present invention relates to a data cleaning program capable of preventing deleted data on a data recording medium from being restored.

### BACKGROUND ART

There are various kinds of data recording media for use in personal computers (hereinafter referred to as PCs); for example, media such as a hard disk, a flexible disk, a CD-RW (Compact Disk ReWritable), a DVD-RAM (Digital Versatile Disc Random Access Memory), a DVD-RW (Digital Versatile Disc Rewritable), or a MO (Magneto Optical disc) have been put to practical use as a data recording media capable of reading and writing data. Among these media, the media except the hard disk are removable.

Hard disks include external one and one incorporated in a PC main body. A hard disk incorporated in a PC main body is mostly used as a boot drive.

A patent document 1 (JP2002-041341A) discloses a configuration for recording data in a hard disk.

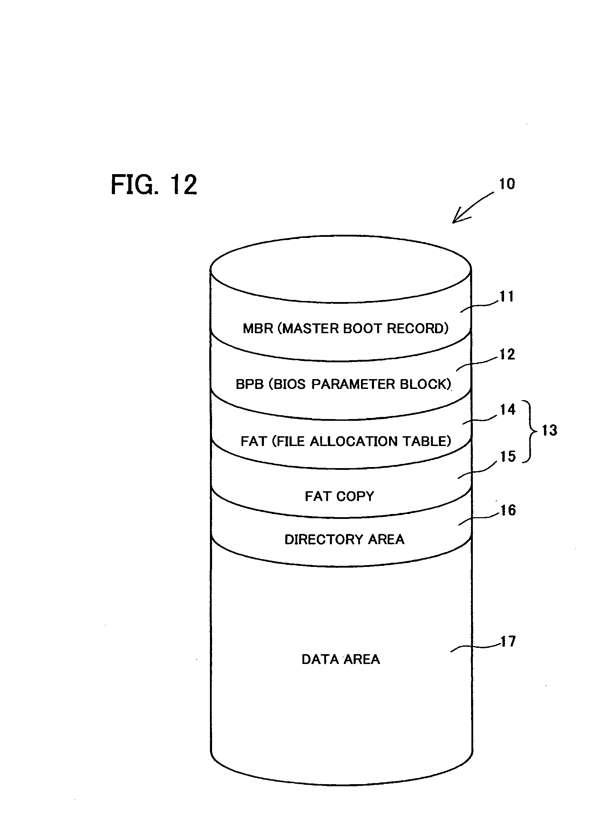

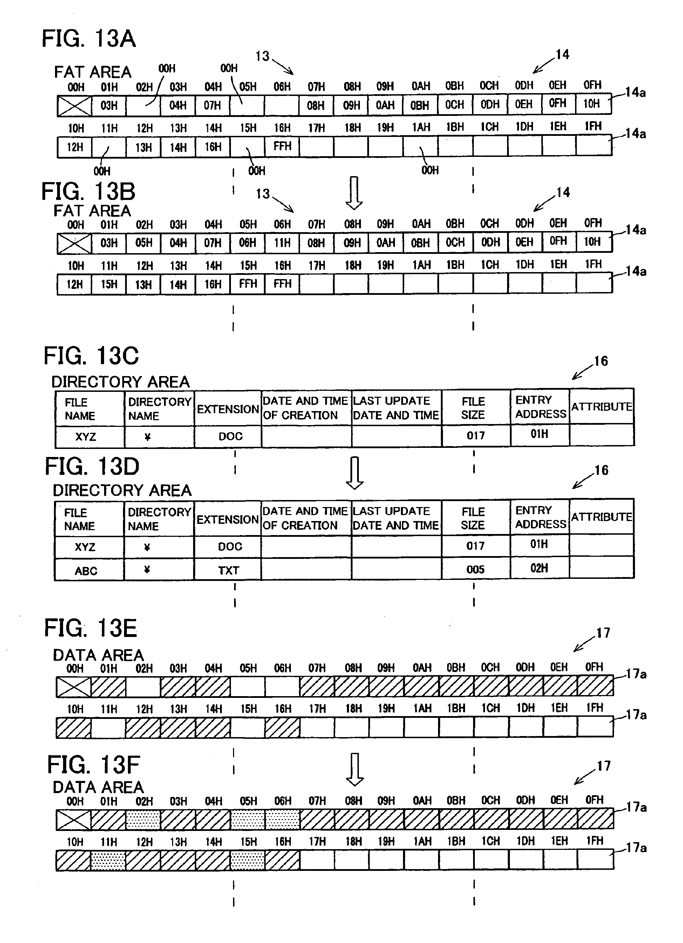

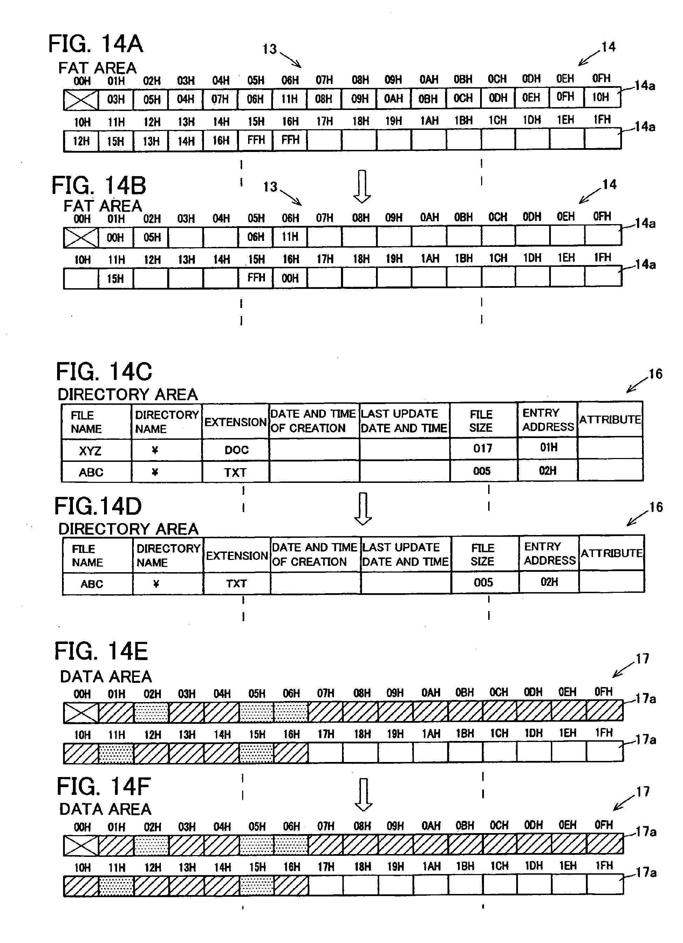

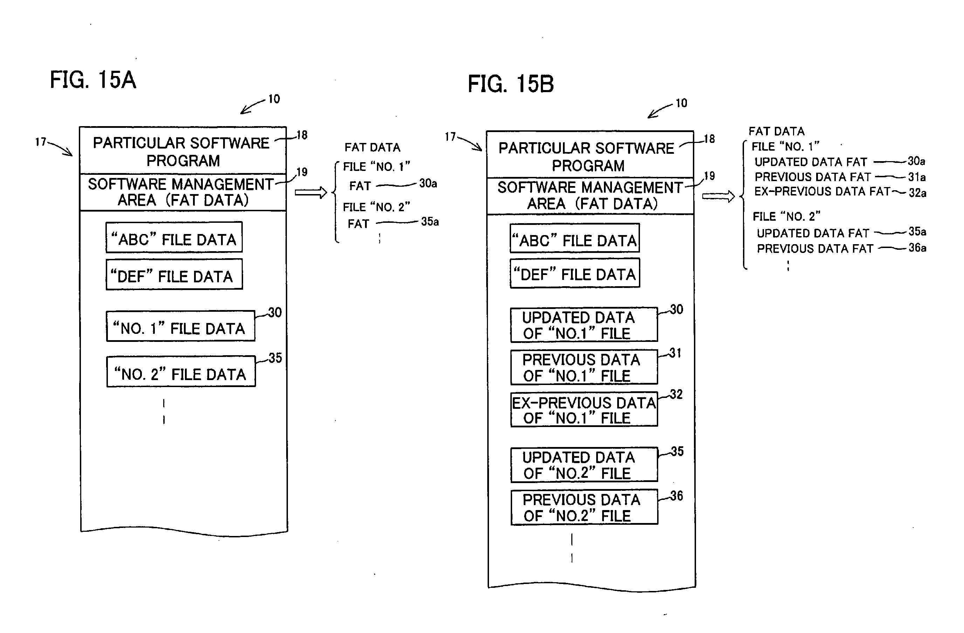

Fig. 12 is a schematic illustration of recording areas of a hard disk disclosed in the patent document 1. Figs. 13A to 13F are schematic illustrations showing processes by which file data is recorded in the hard disk shown in Fig. 12. Figs. 14A to 14F are schematic illustrations showing processes by which the file data recorded in the hard disk shown in Fig. 12 is deleted. Fig. 15 is a schematic illustration showing a state in which a specific software records file data on a hard disk.

The hard disk 10 shown in Fig. 12 is supervised partitionally divided into a plurality of area by an OS (Operating System). Specifically, inside of the hard disk 10 is divided into a MBR (Master Boot Record) area 11, a BPB (BIOS Parameter Block) area 12, a FAT (File Allocation Table) area 13, a directory area 16, and a data area 17 by the OS.

The MBR area 11 is an area that contains an OS boot program (OS Boot Loader) or a partition table that is location information such as a partition location or a size of the program. The BPB area 12 is an area that contains a FAT for supervising input-output with peripheral equipment and BIOS parameters that constitute data relating to a directory entry.

The FAT area 13 is an area that contains a FAT 14 and a FAT 15, the latter being a copy of the former. The FAT 14, as shown in Fig. 13A, consists of a plurality of recording areas 14a capable of recording address data, each of which area has an address such as 00H, 01H, or 02H each corresponding to a cluster address in the data area 17. The FAT 15 also consists of the same recording areas as those of the FAT 14, whereby the data is backed up in case of destruction of data in the FAT 14. Herein, in Figs. 13A to 14F, for convenience of description, hexadecimal 2-byte addresses are assigned to the recording areas 14a in the FAT 14 and clusters 17a in the data area 17.

As shown in Fig. 13A, among the recording areas 14a in the FAT 14, a recording area 14a having a release code "00H" recorded therein indicates an empty area. The recording areas 14a recording addresses 01H and thereafter indicate areas having corresponding data recorded in clusters 17a in the data area 17. As shown in Fig. 13A, for example, when address 03H is recorded in the recording area 14a with the address 01H in the FAT 14, file data is recorded in the cluster with the address 01H in the data area 17, and data contiguous to the file data is recorded in the cluster with the address 03H. Specifically, addresses recorded in the recording area 14a in the FAT 14 indicate addresses of a cluster chain in the data area 17 in which file data are recorded. A file termination code "FFH" is recorded in the recording area 14a in the FAT 14 corresponding to the cluster 17a in the data area 17 in which a file termination is recorded.

The directory area 16 is an area in which file information is recorded. As shown in Fig. 13C, on each file recorded on the hard disk, information such as a file name, a directory name, an extension, a date and time of creation, a last update date and time, a file size, an entry address, and an attribute that relates to the file is recorded in the directory area 16.

The data area 17 is an area in which file data body is recorded. As shown in Fig. 13E, the data area 17 consists of a plurality of clusters 17a for recording data. Address such as 00H, 01H, or 02H is assigned to each cluster 17a.

Processes shown in Figs. 13A to 13F are performed by an OS in order to store on the hard disk 10 data generated by software such as a text editor and a word processor.

Figs. 13A to 13F exemplify the case of storing a file "ABC" created by a text editor on the hard disk 10 in which a file "XYZ" created by a word processor is recorded.

The OS first refers to the FAT 14 shown in Fig. 13A to determine an address corresponding to the recording area 14a having the smallest address except the address 00H among empty recording areas 14a, in which the release codes "00H"s are recorded, so as to find address 02H. Then, the OS records data in the cluster 17a with the address 02H in the data area 17 shown in Fig. 13E.

If and when a size of the file "ABC" exceeds the capacity of one cluster 17a, the OS refers to the FAT 14 to determine an address corresponding to the next-smallest empty recording area after the address 02H, so as to find address 05H. Then, the OS records the address 05H in the recording area 14a with the address 02H and records the following data in the cluster 17a with the address 05H in the data area 17. In this way, the OS records data in a plurality of clusters 17a in the data area 17 corresponding to a plurality of empty recording areas 14a in the FAT area 13. The file termination code "FFH" is recorded in the recording area 14a with address 15H, in which a file termination is recorded.

Next, the OS, as shown in Fig. 13D, records a file name "ABC", a destination directory name, an extension "TXT", a date and time of creation, a last update day and time, a file size "005", an entry address "02H", and an attribute in the directory area 16 of the hard disk 10, thereby completing the processes for storing the data.

With access to the file "ABC", the OS refers to the directory area 16 shown in Fig. 13D to determine the entry address "02H" of the file "ABC". Then, the OS refers to the FAT 14 shown in Fig. 13B to determine an address of a cluster chain in which the data of the file "ABC" is recorded, thereby reading the file from the data area 17 into a main memory area. The main memory area is supervised by a central processing unit (CPU).

On the other hand, processes shown in Figs. 14A to 14F are performed by an OS or software such as a text editor and a word processor in order to delete file data from a hard disk.

As shown in Figs. 14C and D, in the case of deleting the file "XYZ" on the hard disk 10, the OS refers to the directory area 16 to determine the entry address 01H of the file "XYZ". Then, as shown in Fig. 14B, the OS overwrites the release code "00H" on the address 03H (shown in Fig. 14A) of the cluster chain recorded in the recording area 14a with the address 01H. Subsequently, the OS overwrites the release code "00H" on address "04H" (shown in Fig. 14A) of the cluster chain recorded in the recording area 14a with the address 03H.

In this way, the release codes "00H"s are written over all the recording areas 14a in the FAT 14 relating to the file "XYZ". Herein, in Fig. 14B, "00H"s are described in only the addresses 01H and 16H in the FAT 14 by using lead lines, and description of the release codes "00H"s to the other addresses relating to the file "XYZ" is omitted. Thereafter, the OS, as shown in Fig. 14D, erases the data relating to the file "XYZ" in the directory area 16, thereby completing the processes for deleting the file "XYZ" on the hard disk 10.

The above description is summarized as follows:

When an operator performs deletion of the file "XYZ", the recording areas 14a in the FAT 14 corresponding to the addresses of the clusters 17a in the data area 17 in each of which the data of the file "XYZ" is recorded are released by the OS.

Another data can be written over the clusters 17a in the data area 17 corresponding to the released recording areas 14a. Specifically, even when the operator deletes the file "XYZ", the data body recorded in the clusters 17a in the data area 17 is not erased, and the recording areas 14a in the FAT 14 corresponding to indexes of the data are merely released.

More specifically, recorded data body is not erased only by deletion operation (such as undergoing of physical formatting or logical formatting) of recording media by means of an operating system (hereinafter referred to as OS) such as MS-DOS (registered or unregistered trade mark of US Microsoft Corporation in the US and other countries).

Consequently, after deletion of the file "XYZ", the data of the file "XYZ" itself remains until another file data is written over the clusters 17a.

Patent Document 1: JP2002-041341A

### DISCLOSURE OF THE INVENTION

### PROBLEMS TO BE SOLVED BY THE INVENTION

When a PC is relinquished (or given to someone, traded in, broken, or the like), it is preferable to delete data recorded in its recording medium in advance so as to prevent the deleted data from being restored. Data is commonly deleted before a PC is relinquished, but the deleted data might be restored by a third party because of the above-mentioned situation.

Especially, a hard disk is different from other removable data recording media in that the hard disk itself cannot be generally carried alone because being secured to a PC body. Thus, despite deletion operation of a file, the deleted data may be restored by a third party, resulting in leakage of the data.

In order to solve this problem, a data cleaning software that operates on an OS data body recorded in a recording medium has been developed. This software deletes original data by overwriting desired dummy data in a recording medium.

Relating to such a problem of file management by an OS, particular software installed in a computer includes one that reserves a part of a data area as a software management area. According to such a particular software, storing of a file created by the particular software records an updated data in a data area, separating it from a previous data, and also records a FAT data that indicates addresses of clusters in which the updated data relating to the file and all the previous data in the software management area are recorded.

Specifically, according to such a particular software, as shown in Fig. 15A, when a particular software (program) 18 is stored in the data area 17 of the hard disk 10, the software 18 reserves a software management area 19 of a predetermined size on the data area 17 under the management of the OS.

Storing operation of a file "No. 1" created by the software 18, as shown in Fig. 15A, records a "NO. 1" file data 30 in the data area 17. Further, separately from the FAT 14 managed by the OS, the software 18 records a FAT data 30a of the file "No. 1" in the software management area 19. Another file "No. 2" created by the software 18 is also stored in a similar operation.

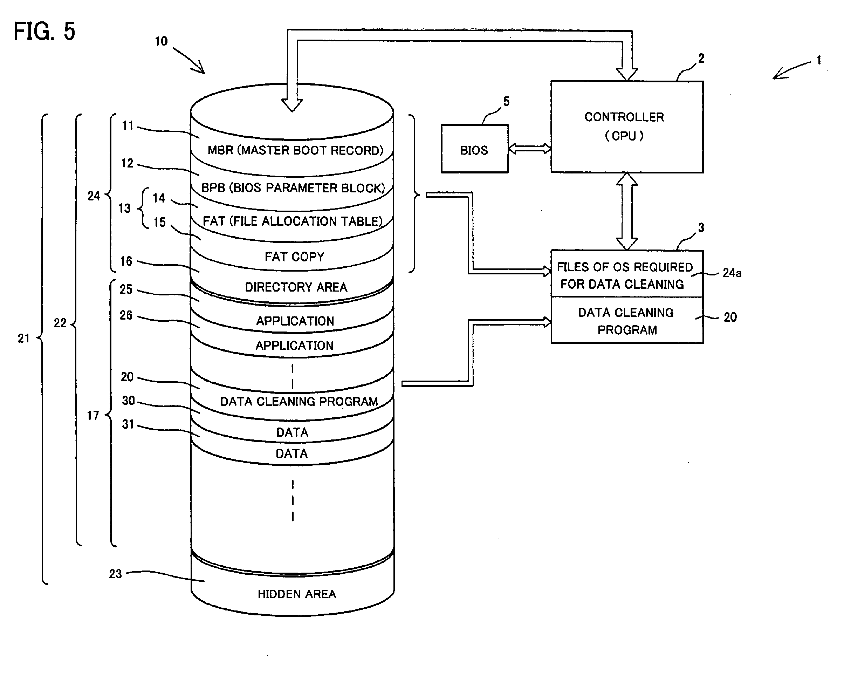

Update storing operation of the file "No. 1" created by the software 18, as shown in Fig. 5B, records a newest updated data 30, and also records a previous data 31 before the update in another cluster different from that of the updated data 30. Further, respective FAT data 30a and 30b of the updated data 30 and the previous data 31 are recorded in the software management area 19. Another update storing operation records an updated data 30, a previous data 31, and an ex-previous data 32, and further records respective FAT data 30a, 31a, and 32a of the updated data 30, the previous data 31, and the ex-previous data 32a in the software management area 19.

However, among data recorded by the software 18, the OS manages only the updated data 30 and 35, and FATs corresponding to clusters in which the previous data 31 and 36 and the ex-previous data 32 are recorded are released.

Upon deletion operation of a file created by the software 18, the OS releases FATs corresponding to clusters in which the updated data 30 and 35 are recorded, but the respective FAT data 30a, 31a, and 32a and FAT data 35a and 36a among the files recorded in the software management area 19 remain even after the deletion operation.

Specifically, according to such particular software 18, FAT data of a previous data and/or an ex-previous data still remain in the software management area 19 after the updating operation of a file. Further, even after the deletion operation of a file, FAT data indicating all clusters in each of which data relating to the file is recorded still remains in the software management area 19.

Still further, until another data is written over released clusters, data body in the data area 17 still remains.

For this reason, in the case of using such particular software, though users think to have updated a file, special software might restore and read out the previous data 31 or the ex-previous data 32 in reference to the FAT data recorded in the software management area 19. Further, even after the deletion operation, the special software might restore the updated data 30, the previous data 31, or the ex-previous data 32, resulting in leakage of the restored data. Thus, an improvement has been desired in view of ensuring security.

Recently, a hard disk having a hidden area managed by a system such as a BIOS in a built-in hard disk and mounting an install function of an OS in the hidden area has been developed, and there is provided a PC with such a hard disk.

According to such a PC, an OS is reinstalled dispensing with a recovery disk provided by a disk such as a CD-ROM, achieving a cost saving and convenience with no need for storage management of a recovery disk.

However, the conventional software cannot execute a selective erasure of only desired data on a hard disk.

Specifically, when data cleaning is performed on a hard disk with an install function of the OS by use of the conventional cleaning software, even the hidden area managed by the BIOS is also written over. Because of this, deleted data recorded in the hard disk is made unrestorable, but even the install function of the OS is made unusable.

On the other hand, each PC maker gives a function for installing an OS in a hard disk, and does not attach a recovery disk such as a CD-ROM instead, so as to provide a cost saving. Consequently, when the conventional cleaning software performs data cleaning on a hard disk, the hard disk cannot be returned to an initial purchased environment.

The present invention is provided in view of the above-mentioned problems and drawbacks.

A first object of the present invention is to provide a data cleaning program adapted to make deleted data remaining in a data recording medium to be unrestorable.

Further, a second object of the present invention is to provide a data cleaning program adapted to selectively erase data stored in a data recording medium so as to prevent remaining deleted data from being restored and also to readily restore the data recording medium in an initial purchased state.

### SUMMARY OF THE INVENTION

To achieve the two objects described above, the inventor takes technical measures described below.

An OS (Operating System) described below denotes a basic program for running a data cleaning program of the present invention or application software. The OS includes Windows (registered or unregistered trade mark in the US and other countries of US Microsoft Corporation), MS-DOS, or MacOS (registered trade mark in the US and other countries of Apple Computer, Inc.).

A controller denotes a configuration including an OS and a central processing unit (CPU) executing access control over a data recording medium by using the OS. In the following description, a FAT area denotes at least an area containing a FAT (File Allocation Table) for managing cluster addresses of a data area in which data body is recorded. The FAT area may contain, in addition to the FAT, a directory data relating to file information or a part of data. Further, in the following description, a file termination code indicating a termination of data is recorded at the end of cluster chain addresses.

A BIOS (Basic Input/Output System) denotes a program that provides an OS or application software with basic input/output control over peripheral equipments such as various kinds of disk drives or a key board connected to a data processing device (PC). The BIOS is generally stored in a nonvolatile memory in a data processing device.

Further, a main memory denotes a memory accessible directly from a controller. The main memory is executed by reading a program file or data.

One of aspects of the invention proposed to achieve the above-mentioned first object is a data cleaning program to be contained in a data processing device having a data recording medium and a controller for access control over the data recording medium, wherein the data recording medium is controlled by the controller by being divided into a data area and a FAT area, the data area having a plurality of clusters in which file data is to be recorded and being adapted to have the file data recorded in one cluster or distributedly among a plurality of clusters, the FAT area having a plurality of recording areas with addresses specifying the clusters, each of the recording areas being adapted to have one selected from the following and recorded therein: (a) an address of a cluster in a cluster chain in which data contiguous to a file data recorded in a cluster corresponding to the recording area is recorded and (b) a release code, and the program being adapted to refer to the FAT area to extract addresses of all recording areas in which the release codes are recorded, so as to sequentially overwrite clusters corresponding to the extracted addresses with predetermined data.

Herein, a cluster in the data area corresponding to an address of a recording area, among a plurality of recording areas constituting the FAT, containing an address of a cluster in a cluster chain relating to one data corresponds with a cluster in which data managed by an OS (i.e.. undeleted data) is recorded.

On the contrary, the release code is recorded in an address of a recording area in the FAT area corresponding to a cluster in which data has never been recorded in the past or a cluster in which data unnecessary for management by an OS resulting from deletion or update remains.

The present aspect writes predetermined data over a cluster in the data area corresponding to an address of a recording area in which the release code is recorded, among a plurality of recording areas constituting the FAT area. Specifically, the predetermined data are written over all clusters in each of which data unnecessary for management resulting from deletion or update remains.

Thereby, even if special analysis software refers to the FAT area or a data area, it is impossible to restore all previous data relating to deleted or updated data. That prevents data from being leaked.

Another aspect of the present invention is a data cleaning program to be contained in a data processing device having a data recording medium and a controller for access control over the data recording medium, wherein the data recording medium is controlled by the controller by being divided into a data area and a FAT area, the data area having a plurality of clusters in which file data is to be recorded and being adapted to have the file data recorded in one cluster or distributedly among a plurality of clusters, the FAT area having a plurality of recording areas with addresses specifying the cluster, each of the recording areas being adapted to have one selected from the following and recorded therein: (a) an address of a cluster in a cluster chain in which data contiguous to a file data recorded in a cluster corresponding to the recording area is recorded and (b) a release code, the data area further containing a particular software, wherein the particular software is adapted to reserve a part of the data area as a software management area, and in storing of a created file, to record updated data of the file in the data area with separating from previous data and to record FAT data indicating the clusters in which the updated data and all the previous data relating to the file are recorded in the software management area as well, and the program being adapted to specify a file created by the particular software to extract addresses of all clusters in which data relating to the file is recorded in reference to the FAT data recorded in the software management area and to extract addresses of all recording areas in which the release codes are recorded in reference to the FAT area, so as to sequentially perform overwriting operations in each of which predetermined data is written over clusters with addresses corresponding to logical product of the both extracted addresses.

The present aspect refers to the FAT data of the software management area recorded by the particular software to extract addresses of all clusters in which data relating to the specified file is recorded. Specifically, in reference to the FAT data of the software management area, the addresses of the clusters in which updated data (the latest data) and all previous data of the file are recorded are extracted.

The controller refers to the FAT area to extract all addresses of recording areas in each of which the release code is recorded. Specifically, addresses corresponding to all the clusters in which data unnecessary for management remains, except clusters in which a file data managed by an OS is recorded, are extracted.

Then, the controller calculates logical product of the both extracted addresses, so as to write the predetermined data over only the clusters in each of which the file data managed by the OS is not recorded, among the clusters relating to all data of the specified file.

Consequently, in the case that the specified file is deleted before data cleaning, all the clusters relating to the file are written over. In the case that the specified file is updated before data cleaning, the clusters relating to all previous data except updated data (the latest data) are written over.

Specifically, the present aspect writes the predetermined data over only clusters in which data relating to a specified file remains, except clusters in which a necessary file managed by the OS is recorded. That prevents deleted file or updated file from being restored in reference to a FAT data recorded in the software management area by special software.

Further, the present aspect writes the predetermined data over only the clusters except the clusters in which file data managed by the OS is recorded, among the clusters in which data relating to a specified file is recorded.

Consequently, data cleaning of the specified file is completed in a short period of time.

Specifically, the present aspect prevents updated data or previous data of a file created by the particular software from being restored and provides a data cleaning program that ensures security of a data recording medium with certainty.

In addition to the above-mentioned configuration, the data cleaning program of the present aspect is preferably adapted to write the predetermined data over FAT data corresponding to the clusters on which the overwriting operation is performed among the FAT data recorded in the software management area.

The present aspect performs the overwriting operation on clusters in which data relating to a specified file is recorded. Consequently, even when the FAT data relating to the specified file remains in the software management area managed by the particular software, the data is prevented from being restored.

However, restoration of deleted data might be possible by means such as analysis of remaining magnetism in the clusters if special software refers to the FAT data, thereby specifying the clusters in which the deleted data has been recorded.

The present aspect prevents specifying the clusters in which the deleted data has been recorded since the FAT data remaining in the software management area is also written over with the predetermined data. Thereby, it is possible to completely prevent the deleted data from being restored and to further improve security.

In other words, the present aspect provides the data cleaning program adapted to prevent reading FAT data recorded by the particular software and adapted to further ensure security of a data recording medium.

Still another aspect of the present invention is a data cleaning program adapted to selectively execute either one of the programs described above by the controller.

The present aspects efficiently performs the overwriting operation as required on the clusters in which deleted data has been recorded by selectively executing desired cleaning program according to need.

The present aspect provides the data cleaning program having effects achieved by the data cleaning programs of the above-mentioned aspects.

In addition to the above-mentioned configuration, the data cleaning program of the present aspect is preferably adapted to perform the overwriting operation by repeating a desired and predetermined number of writing of same data or various data.

Herein, a magnetic data recording medium such as a hard disk or a flexible disk employs a data recording system that determines "1" or "0" by partitioning a magnetic pole of a magnetized medium at a predetermined threshold. However, in the case of writing "0" over a portion in which "1" is recorded, while "0" can be read, the magnetic pole is not entirely reversed. Thus, a special process for detailed analysis of magnetization level may restore data before overwriting although the data is written over with a predetermined data.

The present aspect writes same predetermined data or various predetermined data repeatedly over a cluster in the data area or a FAT data in the software management area by the software. That makes it extremely difficult to restore the data body by tracing a history of magnetization and to restore the FAT data corresponding to an index of the data body, and efficiently prevents reading of data.

The predetermined data to be written may be desirably selected from data such as "00H", "FFH", or "E5H". One selected from these predetermined data or a plurality of predetermined data are repeatedly written over clusters predetermined times, thereby completely preventing reading of data.

In other words, the present aspect provides the data cleaning program that completely prevents reading overwritten data and further ensures security of a data recording medium.

The data cleaning program of the present invention preferably employs a hard disk as the data recording medium.

The program of the invention described above may be applied to a data recording medium managed by being divided into a FAT area and a data area, that is, all data recording medium such as a hard disk, a flexible disk, a CD-RW, a DVD-RAM, a DVD-RW, and a MO (magneto optical disk).

All data recording media except a hard disk are removable media. A hard disk is often fixedly installed in a computer body. Therefore, compared to a removable medium, a hard disk is subject to have trouble that a deleted file data or a previous data of an updated file is read out without permission.

However, even if a deleted data remains on the hard disk, the data cleaning operation of the present aspect prevents restoration of the deleted data. Consequently, it is possible to prevent leaks of data and to ensure security.

Specifically, the present aspect provides the data cleaning program that ensures security of a hard disk.

In addition to the above-mentioned configuration, the data cleaning program of the present aspect is preferably adapted to automatically run to start cleaning operation by the controller either at a predetermined time or on condition that another operation has not been continuously performed for a predetermined period of time.

The data cleaning operation of the present aspect writes a predetermined data over clusters in which an unnecessary deleted data remains. Thus, a data recording medium having larger recording capacity requires increased time for overwriting with the predetermined data. Therefore, it is efficient to execute the data cleaning operation while a data processing device (PC) is not in use. Further, the automatic cleaning operation reduces the bother.

According to the present aspect, it is possible to set a start time of the data cleaning operation at a desired time such as in the middle of the night to efficiently execute the operation. To start the operation, it is also possible to determine a period of time during which the data processing device is not in use by that another operation such as document creation by a word processor has not been continuously performed for a predetermined period of time. That reduces the load on a central processing unit (CPU) and efficiently executes the operation.

Specifically, the present aspect provides the data cleaning program that efficiently executes the data cleaning operation on a data recording medium.

Yet another aspect of the present invention is a data cleaning program to be contained in a data processing device, wherein the data processing device includes a data recording medium and a controller for access control over the data recording medium, wherein the data recording medium is controlled by the controller by being divided into a data area and a FAT area, the data area having a plurality of clusters in which file data is to be recorded and being adapted to have the file data recorded in one cluster or distributedly among a plurality of clusters, the FAT area having a plurality of recording areas with addresses specifying the clusters, each of the recording areas being adapted to have one selected from the following and recorded therein: (a) an address of a cluster in a cluster chain in which data contiguous to a file data recorded in a cluster corresponding to the recording area is recorded and (b) a release code, and the program being adapted to refer to the FAT area to extract addresses of all recording areas in which the release codes are recorded, so as to overwrite clusters corresponding to the extracted addresses with desired dummy data.

The present aspect writes desired dummy data over data unnecessary for management that remains in clusters in the data area when the latest data is created by updating or executing deleting operation on data recorded in a data recording medium, thereby erasing the data with certainty.

Yet still another aspect of the present invention is a data cleaning program to be contained in a data processing device, wherein the data processing device includes a data recording medium and a controller for access control over the data recording medium, wherein the data recording medium is controlled by the controller by being divided into a data area and a FAT area, the data area having a plurality of clusters in which file data is to be recorded and being adapted to have the file data recorded in one cluster or distributedly among a plurality of clusters, the FAT area having a plurality of recording areas with addresses specifying the clusters, each of the recording areas being adapted to have one selected from the following and recorded therein: (a) an address of a cluster in a cluster chain in which data contiguous to a file data recorded in a cluster corresponding to the recording area is recorded and (b) a release code, the data area further containing a particular software, wherein the particular software is adapted to reserve a part of the data area as a software management area, and in storing of a created file, to record the most updated data of the file in the data area with separating from previous data and to record FAT data indicating the clusters in which the most updated data and all the previous data relating to the file are recorded in the software management area as well, and the program being adapted to specify file data created by the particular software to extract addresses of all clusters in which data relating to the file is recorded in reference to the FAT data recorded in the software management area and to extract addresses of all recording areas in which the release codes are recorded in reference to the FAT area, so as to perform an overwriting operation in which desired dummy data is written over clusters with addresses corresponding to logical product of the both extracted addresses.

The present aspect writes desired dummy data over only clusters except clusters in which a file data managed by the controller is recorded, thereby completing the data cleaning operation of a specified file in a short period of time.

One of aspects of the invention proposed to achieve the above-mentioned second object is a data cleaning program to be contained in a data processing device having a data recording medium and a controller for access control over the data recording medium by an operating system, the program being adapted to operate on the operating system, the program and the system being contained in the data recording medium, and the program being adapted to save by the controller at least one selected from a part of files of the operating system required for cleaning operation and the data cleaning program itself into a main memory when a file contained in the data recording medium is specified, depending on the specified file, so as to perform overwriting operation whereby predetermined data is sequentially written over a corresponding recording area in which the specified data is contained in the data recording medium according to the data cleaning program in either the data recording medium or the main memory in reference to the operating system in either the data recording medium or the main memory, and so as to perform deleting operation whereby the overwritten file is deleted from the management of the operating system when the operating system is not included in the specified file.

Herein, the program of the present aspect is a program operating on an operating system (OS), the program and the system being contained (recorded) in a data recording medium. Consequently, in the case that the OS or the program itself is written over (cleaning operation) by the program, a data processing device might freeze during the overwriting operation.

However, the present aspect saves (copies) a part of files of the OS required for the cleaning operation and/or the program itself into the main memory. Consequently, the cleaning operation is performed by the OS or the program saved in the main memory, thereby avoiding freeze of a data processing device even if the OS or the program recorded in a data recording medium is erased.

Even in the case of cleaning only files constituting the OS recorded in a data recording medium, the present aspect saves a part of files of the OS required for the cleaning operation into the main memory, so as to allow the program recorded in the data recording medium to perform the cleaning operation on the OS recorded in the data recording medium in reference to the OS saved in the main memory.

Further, in the case of cleaning of the data cleaning program itself, the present aspect saves the program into the main memory, so as to allow the program saved in the main memory to perform the cleaning operation on the program recorded in a data recording medium in reference to the OS recorded in the data recording medium.

Still further, it is possible to perform the cleaning operation on all files recorded in a data recording medium with the OS and the program saved in the main memory. The OS, the data cleaning program, other software or data are excluded from processing objects, so as to desirably remain in the data recording medium.

Specifically, the present aspect desirably specifies a file to be written over and erased among files contained in a hard disk, thereby executing an overwriting operation without freeze even when the specified file includes the OS or the program.

That facilitates making unnecessary files to be written over and erased and necessary files to be contained in a hard disk, and further prevents original data of the overwritten and erased file from being read.

Further, the present aspect deletes a file overwritten by the program from the management of the OS when the specified file does not include the OS, that is, in the case that the OS is not to be written over and erased. That allows the OS to manage files contained in a data recording medium.

Before execution of the present aspect, it is also possible to form in a part of the main memory a RAM disk, in which the OS or the program can be saved.

According to this configuration, a data processing device executes the OS or the program saved in the RAM disk, thereby continuing an overwriting operation (data cleaning operation) without freeze of the device even when the OS or the program contained in a data recording medium is written over and erased.

Further, the RAM disk is accessible at higher speed than a mechanical recording medium such as a hard disk, and whereby a data processing device executes the cleaning operation at high speed. Still further, when the data processing device is turned off or reset, the OS or the program saved in the RAM disk is erased. Consequently, the restarted data processing device has no file remaining in the main memory without overloading a memory area.

In addition to the above-mentioned configuration, the data cleaning program of the present aspect is preferably adapted to specify all files contained in the data recording medium, and to save by the controller a part of files of the operating system required for cleaning operation and the data cleaning program itself into the main memory when all the files are specified, so as to perform the overwriting operation according to the data cleaning program saved in the main memory in reference to the operating system saved in the main memory.

As described above, in the case that the OS or the program is included in the specified file to be deleted, according to the program contained in a data recording medium, the sequential overwriting and erasing operations of all files contained in the data recording medium cause the operations to freeze during overwriting and erasing of the OS or the program itself.

However, according to the present aspect, with all files contained in a data recording medium specified, a part of files of the OS required for the cleaning operation and the program itself is saved into the main memory. Then, the saved program refers to the similarly saved OS, so as to write over all the files in the data recording medium without freezing the device.

Further, overwriting and erasing of all the files contained in the data recording medium by means of the present aspect completely prevents original data of the files recorded in the medium from being restored, thereby avoiding possibility of reading of the original data.

Still further, as all the files contained in the medium are written over and erased, reinstallation of the OS restores the medium to an initial condition.

In other words, the present aspect provides the data cleaning program that readily writes over and erases all files in a data recording medium.

In addition to the above-mentioned configuration, the data cleaning program of the present aspect may have such a configuration that the controller is adapted to unprotect files constituting the operating system.

The OS contained in a data recording medium sometimes protects each of the files against accidental erasure of files constituting the OS in installing. That prevents overwriting and erasing by the data cleaning program, so as not to write over and erase all files contained in the medium.

According to the present aspect, the data cleaning program allows the controller to unprotect files constituting the operating system. Thereby, all files constituting the OS contained in a data recording medium are written over and erased.

It is preferable that the data cleaning program of the present aspect is adapted to specify, except the operating system among the files contained in the data recording medium, one file selected from (a) the data cleaning program and (b) the data cleaning program and other software and/or data, and is adapted to save by the controller the data cleaning program itself into the main memory when the corresponding file is specified, so as to perform the overwriting operation according to the data cleaning program saved in the main memory in reference to the operating system contained in the medium.

As described above, in the case that the data cleaning program itself is included in the specified file, according to the program contained in a data recording medium, the overwriting and erasing operation of the program itself might cause the operation to freeze during overwriting and erasing.

However, according to the present aspect, with files relating to the data cleaning program specified, the program itself is saved into the main memory and, in reference to the OS contained in a data recording medium, performs an overwriting operation on the files in the medium according to the program saved in the main memory. Thereby, even if the data cleaning program contained in the medium is written over and erased, the data cleaning program saved in the main memory continues the overwriting operation without freezing the device.

Further, the present aspect deletes the files on which the overwriting operation is performed by the program from the management of the OS. That allows the OS to manage files contained in a data recording medium.

Still further, according to the present aspect, when the data cleaning operation is performed with all files of other software and data specified, except the OS, including the data cleaning program, a data recording medium is made to contain only the OS. Yet further, original data of the program or the other software and data, which are written over and erased, is not read.

Thereby, the data recording medium is restored to an initial condition in which only the OS is contained in the medium, and further, saves the trouble of reinstalling of the OS.

It is preferable that the data cleaning program of the present aspect is adapted to specify, except the operating system and the data cleaning program among the files contained in the data recording medium, at least one file selected from the other software and the data, and is adapted to perform the overwriting operation by the controller according to the data cleaning program contained in the medium in reference to the operating system contained in the medium when the corresponding file is specified.

According to the present aspect, as the OS or the data cleaning program is not specified to be written over, the OS or the program itself is not written over and erased. Consequently, the overwriting operation is performed according to the program contained in a data recording medium in reference to the OS contained in the medium without saving the OS or the program itself into the main memory. That writes over and erases the other software or the data that is specified, thereby preventing reading of original data.

Further, the present aspect deletes the files on which the overwriting operation is performed by the program from the management of the OS. That allows the OS to manage files contained in a data recording medium.

Herein, if the files contained in the medium were deleted by the OS, only data relating to the files recorded in the directory area and the FAT (File Allocation Table) area managed by the OS might be deleted and actual data (data body) of the files might remain in the data recording area. Thus, in the case that the OS continues to delete files, the actual data of the deleted file might remain until another data is written over the data recording area in which the actual data is recorded.

However, according to the present aspect, the data cleaning program deletes a specified file from the management of the OS and writes over and erases actual data of the file. Specifically, the data cleaning operation executed with a file specified writes over and erases actual data every time, so that the actual data of the deleted file does not remain as in the case of deletion by the OS.

Further, if and when daily deletion of software or data is performed by the data cleaning operation of the present aspect, actual data of a file deleted in the past does not remain.

Consequently, the data cleaning operation executed with all files of other software and data specified restores a data recording medium to a condition in which only the OS and the data cleaning program are contained in the medium.

In other words, the data cleaning operation facilitates restoring a data recording medium to an initial condition in which only the OS and the data cleaning program are contained in the medium, and further saves the trouble of reinstalling of the OS.

More specifically, the present aspect provides the data cleaning program that readily restores a data recording medium to a condition in which the OS and the program are contained in the medium without reinstallation of the OS and the program itself.

In addition to the above-mentioned configuration, the data cleaning program of the present aspect has such a configuration that the data recording medium includes a hidden area managed by the operating system or a BIOS, the hidden area having an installing function of the operating system and being protected from being written over by the data cleaning program.

According to the present aspect, the hidden area is not written over by the data cleaning operation, so that files required for installation of the OS contained in the hidden area are not erased.

Consequently, the data cleaning program may have such a configuration that the data recording medium has a hidden area managed by the operating system or the BIOS, the hidden area having an installing function of the operating system and being protected from being written over by the program and a part of files of the operating system saved in the main memory. Thus, after overwriting and erasing of all files contained in the data recording medium, the installing function of the hidden area reinstalls the OS in the data recording area in the medium.

That restores a data recording medium to an initial condition in which only the OS is contained in the medium. Thereby, original data is not restored and read by a third party. Further, the installing function of the OS provided in the hidden area makes it unnecessary to attach another OS installing disk, thereby achieving cost saving and saving the trouble of storage management of the OS installing disk.

The present aspect may employ such a configuration as managing the hidden area by the OS. Specifically, it is possible to run the installing function by using the OS contained in the hidden area or the OS of another drive.

Further, the present aspect may employ such a configuration as managing the hidden area by the BIOS. Specifically, it is possible to run the installing function by using the BIOS in the case that the OS is not contained in the data recording medium.

A number of files constituting the OS contained in a data recording medium include a file stably workable alone and a file workable in conjunction with software such as a device driver not included in the OS.

Thus, if and when the data cleaning operation is executed with the OS remaining in the data recording medium as in the case of the above-mentioned aspect, the OS might work unstably.

However, according to the present aspect, the hidden area contains files required for installing the operating system. Consequently, even in the case of possible unstable operation of the OS as a result of the data cleaning operation by the above-mentioned aspect, the controller saves the data cleaning program and a part of files of the operating system into the main memory, so as to execute the data cleaning operation by using the program and a part of files of the system saved in the main memory and then to reinstall the OS by using the files required for installing the hidden area after erasure of all files including the OS. That restores the data recording medium to a condition in which only the OS is contained in the medium, and further ensures a stable operation of the data processing device.

Specifically, being applied to the above-mentioned aspect, the present aspect readily installs the OS by using the installing function of the hidden area and readily restores the data recording medium to an initial condition.

In addition to the above-mentioned configuration, the data cleaning program of the present aspect may perform the overwriting operation by repeating a predetermined number of writing of same data or various data.

Herein, a magnetic data recording medium such as a hard disk employs a data recording system that determines "1" or "0" by partitioning a magnetic pole of a magnetized medium at a predetermined threshold. However, in the case of writing "0" over a portion in which "1" is recorded, while "0" can be read, the magnetic pole is not entirely reversed. Thus, a special process for detailed analysis of magnetization level might read out original data before overwritten although the data is written over.

The present aspect repeatedly writes same data or various data over the data recording area, thereby making it extremely difficult to restore the original data by tracing a history of magnetization, and efficiently prevents reading of original data.

The written data may be desirably selected from data such as "00H", "FFH", or "E5H". One or a plurality of data selected from these data is repeatedly written over predetermined times, thereby completely preventing reading of original data.

Specifically, the present aspect provides the data cleaning program that completely prevents reading of original data and further improves security.

In addition to the above-mentioned configuration, the data cleaning program of the present aspect preferably employs a hard disk as the data recording medium.

A hard disk has a significantly large recording capacity compared with other data recording media and is generally used as a recording medium for boot containing an OS. The present aspect facilitates writing over and erasing original data recorded in a hard disk, a data recording medium, by using the data cleaning program, thereby completely preventing reading of original data and ensuring security.

In other words, the present aspect provides the data cleaning program that completely prevents original data recorded in a hard disk from being read and improves security.

Another aspect is to provide a data cleaning program to be contained in a data processing device, wherein the data processing device includes a data recording medium and a controller for access control over the data recording medium by an operating system, the program being adapted to operate on the operating system, the program and the system being contained in the data recording medium, and the program being adapted to save at least one selected from a part of files of the operating system required for data cleaning operation and the data cleaning program into a main memory when a file contained in the data recording medium is specified to be cleaned so as to prevent the data processing device from stopping during the data cleaning operation, so that the data cleaning operation is performed by one selected from the part of files of the operating system required for the cleaning operation and the data cleaning program saved in the main memory.

The present aspect executes the data cleaning operation by using a part of files of the operating system required for the operation or the data cleaning program, both saved in the main memory, so as to complete the operation without stopping a data processing device during the operation.

### ADVANTAGEOUS EFFECT OF THE INVENTION

The present invention to achieve the first object makes it impossible to read unnecessary data remaining in a data recording medium, and thus provides a data cleaning program that prevents data from being restored and leaked and ensures security against data leakage.

The present invention to achieve the second object provides a data cleaning program that facilitates writing over and erasing specified files including an OS or the program itself contained in a data recording medium and facilitates making the medium to a desired condition in which files are contained in the medium.

### BRIEF DESCRIPTION OF THE DRAWINGS

Figs. 1 A to D are pattern diagrams illustrating an operation by a data cleaning program relating to an embodiment of the present invention;
Fig. 2 is a pattern diagram illustrating a process in which a stored or deleted file is dealt with by a data cleaning program relating to another embodiment of the present invention.;
Fig. 3 is a pattern diagram illustrating a process in which an updated file or a data deleted after update is dealt with by the data cleaning program in Fig. 2;
Fig. 4 is a schematic diagram showing an internal configuration of a data processing device containing a data cleaning program relating to an embodiment of the present embodiment;
Fig. 5 is a schematic diagram showing processes of a data cleaning operation in specifying all files stored in a data recording medium in the data processing device in Fig. 4;
Fig. 6 is a schematic diagram showing a state in which the data cleaning operation shown in Fig. 5 is completed;
Fig. 7 is a schematic diagram showing a state in which an OS is reinstalled in the data recording medium on which the data cleaning operation shown in Fig. 6 has been performed;
Fig. 8 is a schematic diagram showing processes of a data cleaning operation in specifying all other files except an OS in the data processing device in Fig. 4;
Fig. 9 is a schematic diagram showing a state in which the data cleaning operation shown in Fig. 8 is completed;
Fig. 10 is a schematic diagram showing processes of a data cleaning operation in specifying all other files except an OS and the data cleaning program;
Fig. 11 is a schematic diagram showing a state in which the data cleaning operation shown in Fig. 10 is completed;
Fig. 12 is a schematic diagram showing a configuration of management of recording areas in a hard disk disclosed in the patent document 1;
Figs. 13A to F are pattern diagrams illustrating processes in which a file data is recorded in the hard disk shown in Fig. 12;
Figs. 14A to F are pattern diagrams illustrating processes in which a file data recorded in the hard disk shown in Fig.12 is deleted; and
Figs. 15A and B are schematic diagrams showing processes in which a file data is recorded in the hard disk shown in Fig. 12 by a particular software.

### DESCRIPTION OF THE PREFERRED EMBODIMENTS

Now, a preferred embodiment of the present invention will be described below, making reference to the accompanying drawings.

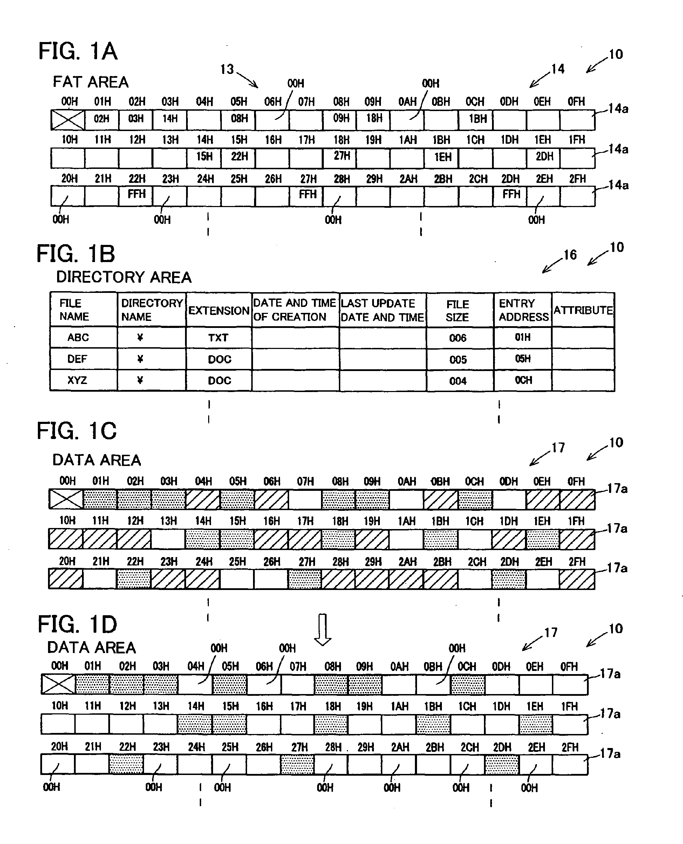

Figs. 1A to D are pattern diagrams illustrating operation performed by a data cleaning program relating to an embodiment of the present invention.

Herein, a controller denotes a configuration including an OS and a central processing unit (CPU) performing access control over a data recording medium by the OS. The present embodiment employs a hard disk as the data recording medium, and explains that access control over the hard disk is to be performed by the controller.

In the following description, addresses assigned to each of recording areas 14a constituting a FAT 14 and addresses assigned to each of clusters 17a in a data area 17 employ hexadecimal 2-byte values, each starting with "00H". "00H" (value) denotes a release code and "FFH" (value) denotes a data termination code.

In the present embodiment, the data cleaning program is to be installed in a hard disk in advance at the inception of data cleaning operation. The data cleaning program is executed by the controller.

Figs. 1A to C each shows a state in which three files "ABC", "DEF", and "XYZ" are recorded in a hard disk 10. The file "ABC", as shown in Fig. 1B, is a text file (TXT) having a file size of 6 KB (kilobyte) with an entry address 00H. Specifically, file data of the file "ABC", as shown in Figs. 1A and C, is recorded distributedly among six clusters 17a with addresses 01H, 02H, 03H, 14H, 15H, and 22H.

The file "DEF", as shown in Fig. 1B, is a document file (DOC) having a file size of 5 KB (kilobyte) with an entry address 05H. Specifically, file data of the file "DEF", as shown in Figs. 1A to C, is recorded distributedly in five clusters 17a with addresses 05H, 08H, 09H, 18H, and 27H.

The file "XYZ", as shown in Fig. 1B, is a document file (DOC) having a file size of 4 KB (kilobyte) with an entry address OCH. Specifically, file data of the file "XYZ" is recorded distributedly in four clusters 17a with addresses OCH, 1BH, 1EH, and 2DH.

Figs. 1A to D each shows a state in which three files "ABC", "DEF", and "XYZ" exist in the hard disk 10 and are managed by an OS.

Herein, until file data recorded in the hard disk 10 reaches a state shown in Figs. 1A to C, other files except the three files described above have been stored and deleted. Recording areas 14a in the FAT 14 in which the other deleted files have been recorded are written over each with the release code "00H". Further, information in a directory area 16 corresponding to the other deleted files is deleted.

However, as described above, actual data relating to the other deleted files still remains in corresponding clusters 17a in the data area 17. The clusters 17a in each of which the actual data relating to the other deleted files is recorded are marked with diagonal lines in Fig. 1C. Actual data of the three files described above is written over and stored in clusters 17a in which the actual data of the other deleted files was recorded. It follows that the actual data of the other files is dotted across the data area 17 as shown in Fig. 1C.

The data cleaning program in the present embodiment is run by the controller to start a cleaning operation.

According to the data cleaning program, the controller refers to the FAT 14 in a FAT area 13 first to extract addresses of all recording areas 14a in which the release codes "00H"s are recorded. Specifically, in Fig. 1A, addresses such as 04H, 06H, 07H, and 0AH of all recording areas 14a in which the releasing codes "00H"s are recorded are extracted. The extracted addresses of the recording areas 14a correspond to those of either clusters 17a in which data has never recorded or clusters 17a in which unnecessary data (deleted data) remains, among clusters 17a in the data area 17.

Next, the controller sequentially writes and stores "00H"s (value), predetermined data (or desired dummy data), over the clusters 17a in the data area 17 corresponding to the extracted addresses of the recording areas 14a. Specifically, as shown in Fig. 1C, "00H"s (value) are sequentially written over the clusters 17a with the addresses such as 04H, 06H, 07H, and 0AH. Then, the controller overwrites the clusters 17a in the data area 17 corresponding to all of the extracted addresses of the recording areas 14a, thereby completing the data cleaning operation.

The above-mentioned operation makes impossible to read data relating to other files deleted in the past except the three files "ABC", "DEF", and "XYZ" managed by the OS or data relating to all previous data of updated files. Thereby, deleted data remaining in the data area 17 is prevented from being resurrected (restored) by means of a particular kind of analysis software. That prevents restored data from leaking and ensures security of data.

The present embodiment assigns "00H" to predetermined data (or desired dummy data) that is written over clusters 17a in the data area 17, but may select desired data such as "FFH" or "E5H" as the predetermined data (or desired dummy data) to be written. Further, sequential writing of these plurality of predetermined data over extracted clusters 17a realizes more complete prevention of remaining unnecessary data (deleted data) from being read.

Further, the present embodiment has such a configuration that the controller runs the data cleaning program to start the data cleaning operation, but, for example, may has such a configuration as predetermining a time to start the data cleaning operation by timer-setting of the data processing device so that the operation starts automatically when the predetermined time comes. Further, it is possible to start the data cleaning operation automatically in the case that another operation such as sentence writing by a word processor has continuously not performed for a predetermined period of time.

Next, a data cleaning program relating to another embodiment of the present invention will be described.

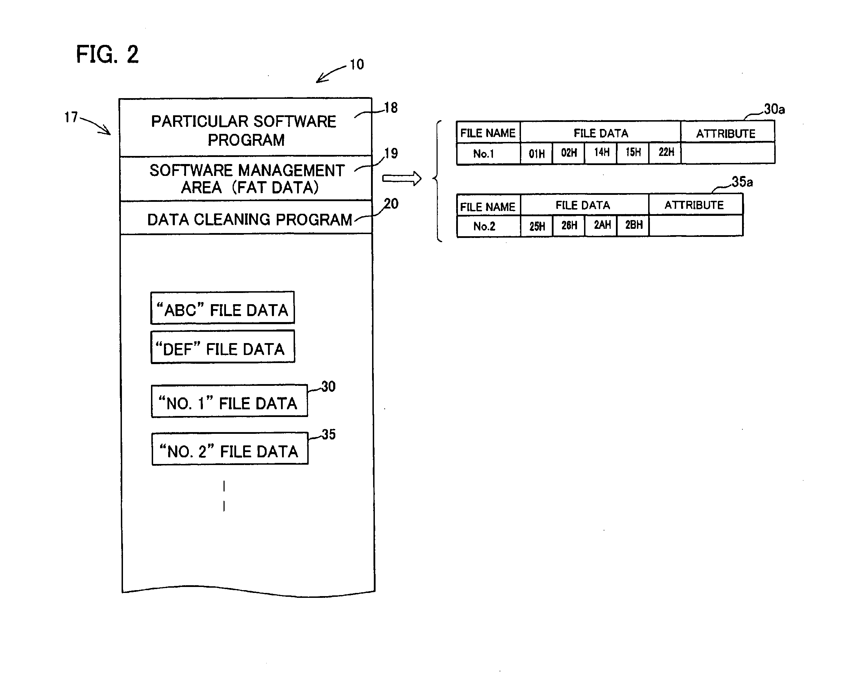

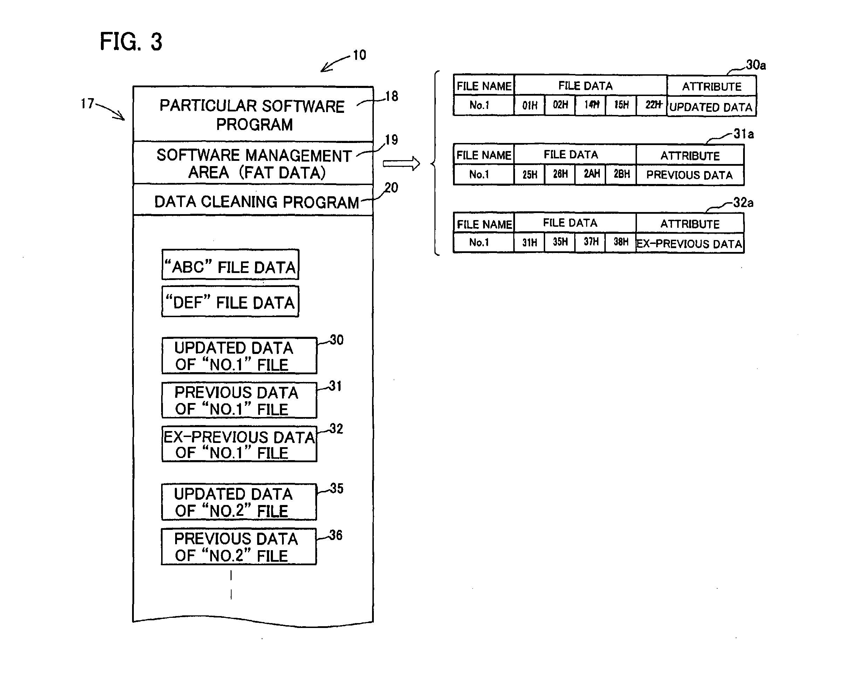

Figs. 2 and 3 are pattern diagrams each illustrating recording areas in a hard disk relating to the present embodiment. The hard disks 10 in Figs. 2 and 3 have the same configuration as that shown in Fig. 12 described above. Thus, the same numerals are assigned to the components of the hard disks 10 in Figs. 2 and 3 as those of the hard disk 10 shown in Fig. 12 and duplicated descriptions are omitted.

The data cleaning program in the present embodiment selectively executes a data cleaning operation of a file data created by particular software 18.

Herein, the following description illustrates a data recording medium as a hard disk.

As shown in Fig. 2, being installed in the hard disk 10, the particular software 18 reserves a part of the data area 17 as a software management area 19 under the management of the OS. The OS cannot delete data recorded in the software management area 19. The particular software 18 has a function of recording in the software management area 19 FAT data indicating clusters 17a in which data of each file relating to the software 18 is recorded, separately from the FAT area 13 and the directory area 16 managed by the OS.

Specifically, upon storing of a file "No. 1" created by the software 18, as shown in Fig. 2, the OS records a "No. 1" file data 30 in a cluster 17a in the data area 17 and manages the data 30 by using FAT, and further records in the software management area 19 FAT data 30a indicating an address of cluster in which the "No. 1" file data 30 is recorded.

The FAT data 30a is constituted by a cluster chain that correlates a file name, a file data address, and a file attribute. Specifically, the FAT data 30a shows that data of the file "No. 1" shown in Fig. 2 is recorded in five clusters 17a with addresses 01H, 02H, 14H, 15H, and 22H in the data area 17.

Similarly, in the case of storing another file "No. 2" created by the software 18, the OS manages the file data and records a FAT data 35a in the software management area 19 by using the software 18.

Further, upon updating and storing of the file "No. 1" created by the software 18 and stored, as shown in Fig. 3, an updated data 30 and a previous data 31 before the update both of the file "No. 1" are separately recorded in clusters 17a in the data area 17. Still further, respective FAT data 30a and 31a of the updated data 30 and the previous data 31 are recorded in the software management area 19.

When the controller repeats updating and storing, all data (an updated data 30, a previous data 31, and an ex-previous data 32) relating to the file "No. 1" are recorded distributedly in the data area 17. The particular software 18 has a function of recording in the software management area 19 all FAT data 30a, 31a, and 32a relating to the file "No. 1".

Herein, as shown in Fig. 3, in the cast that the file "No. 1" has been updated and stored, the OS manages only the updated data and releases recording areas 14a (Fig. 1) in the FAT 14 corresponding to the clusters 17a in which all of the previous data 31 and the ex-previous data 32 are recorded.

Processes whereby a data cleaning operation is executed on a file created by the particular software 18 having such operating functions are described, making reference to Figs. 2 and 3.

The case in which the data cleaning operation will be executed after the "No. 1" file data 30 created by the software 18 is stored is first to be described, making reference to Fig. 2.

Upon running of a data cleaning program 20, a screen asking to enter a file name appears on a display (not shown) of the data processing device. At this stage, file "No. 1" is to be entered as the file name. Upon entry of the file name, the controller refers to the FAT data recorded in the software management area 19 to read out all the FAT data 30a relating to the file "No. 1". In the case of Fig. 2, the FAT data relating to the file "No. 1" is only the FAT data 30a. Then, all the addresses of cluster chain (the addresses 01H, 02H, 14H, 15H, and 22H of the five clusters 17a) relating to the file "No. 1" recorded in the FAT data 30a are extracted.

Next, the controller refers to the FAT 14 (see Fig. 12) managed by the OS to extract all the addresses of recording areas 14a in each of which the release code "00H" is recorded. Then, the controller evaluates logical product of the addresses extracted in reference to the FAT data 30a and the addresses extracted in reference to the FAT 14. However, the file "No. 1" has been just stored and is under the management of the OS. Thus, the addresses extracted in reference to the FAT data 30a all do not correspond with the addresses extracted in reference to the FAT 14.

Consequently, the cleaning operation is completed with writing over clusters 17a with none of the addresses indicated by the FAT data 30a.

Specifically, the data cleaning operation executed on a file created by the particular software 18 and stored does not unintentionally write data over the file.

On the other hand, in Fig. 2, the data cleaning operation executed after deletion of the "No. 1" file data 30, created by the particular software 18 and stored, is different from the above-mentioned operation.

Specifically, if and when the file "No. 1" is deleted, the release codes "00H"s are written over the recording areas 14a with the addresses corresponding to the clusters 17a in which the "No. 1" file data 30 corresponding to the file "No. 1" is recorded. Thereby, the clusters 17a are released from the management of the OS.

When the data cleaning operation is executed after deletion of the "No.1" file data 30, all the addresses extracted in reference to the FAT data 30a correspond with the addresses extracted in reference to the FAT 14. Thus, the predetermined data "00H"s (value) are written over the five clusters with the addresses 01H, 02H, 14H, 15H, and 22H obtained by logical product of the both extracted addresses. Further, "00H"s (value) are written over also the file name and the cluster chain addresses of the FAT data 30a recorded in the software management area 19.

Specifically, after a file created by the particular software 18 and stored is deleted, a data cleaning operation performs an overwriting operation whereby both the "No. 1" file data 30 and the FAT data are written over, thereby making impossible to read the "No. 1" file data 30.

The case of execution of the data cleaning operation after the "No. 1" file data 30 created by the software 18 is updated is next to be described, making reference to Fig. 3.

Upon running of the data cleaning program 20, a screen asking to enter a file name appears on a display (not shown) of the data processing device. At this stage, file "No. 1" is to be entered as the file name. Upon entry of the file name, the controller refers to the FAT data recorded in the software management area 19 to read out all the FAT data 30a, 31a, and 32a relating to the file "No.1".

In this case, as shown in Fig. 3, the FAT data relating to the file "No. 1" are the FAT data 30a, 31a, and 32a corresponding to an updated data (the latest data) 30, a previous data 31, and an ex-previous data 32, respectively. Then, the controller extracts all addresses of cluster chain relating to the file "No. 1" recorded in each of the FAT data 30a, 31a, and 32a. In this case, five addresses 01H, 02H, 14H, 15H, and 22H are extracted from the FAT data 30a, four addresses 25H, 26H, 2AH, and 2BH are extracted from the FAT data 31a, and four addresses 31H, 35H, 37H, and 38H are extracted from the FAT data 32a.

Next, the controller refers to the FAT 14 (see Fig. 12) managed by the OS to extract all addresses of recording areas 14a in each of which the release code "00H" is recorded. Then, the controller evaluates logical product of the addresses extracted in reference to the FAT data 30a and the addresses extracted in reference to the FAT 14.

Herein, the file "No. 1" has been updated, so that the OS manages only the addresses of clusters in which the updated data (the latest data) 30 in the FAT 14 is recorded and releases the Fat 14 corresponding to the addresses of clusters in which the previous data 31 and the ex-previous data are recorded.

Thus, in the case of the execution of the data cleaning operation after the "No. 1" file data is updated, the addresses assigned to the respective FAT data 31a and 32 of the previous data 31 and the ex-previous data 32, except the FAT data 30a of the updated data 30, correspond to the addresses extracted in reference to the FAT 14. Consequently, the predetermined data "00H"s (value) are written over data recorded in the four clusters 17a with the addresses 25H, 26H, 2AH, and 2BH and data recorded in the four clusters 17a with the addresses 31H, 35H, 37H, and 38H both obtained from logical product of the both addresses. Further, "00H"s (value) are written over also the file names and the cluster chain addresses of the FAT data 31a and 32a recorded in the software management area 19.

Specifically, after a file created by the particular software 18 is updated and stored, the data cleaning operation performs an overwriting operation whereby both the data and the FAT data of the file relating to all the previous data except the updated data (the latest data) are written over, thereby making impossible to read the data on which the overwriting operation is performed.

Now, as shown in Fig. 3, the case of execution of the data cleaning operation after the "No. 1" file data 30 created by the software 18, updated, and stored is deleted is third to be described.

Upon running of a data cleaning program 20, a screen asking to enter a file name appears on a display (not shown) of the data processing device. At this stage, file "No. 1" is to be entered as the file name. Upon entry of the file name, the controller refers to the FAT data recorded in the software management area 19 to read out all the FAT data 30a, 31a, and 32a relating to the file "No.1".

In this case, as well as in the case of not being deleted, as shown in Fig. 3, the FAT data relating to the file "No. 1" are the FAT data 30a, 31a, and 32a corresponding to an updated data (the latest data) 30, a previous data 31, and an ex-previous data 32, respectively. The controller read out all these FAT data. Then, the controller extracts all addresses of cluster chain relating to the file "No. 1" recorded in each of the FAT data 30a, 31a, and 32a. In this case, addresses 01H, 02H, 14H, 15H, 22H of five clusters 17a are extracted from the FAT data 30a, addresses 25H, 26H, 2AH, 2BH of four clusters 17a are extracted from the FAT data 31a, and addresses 31 H, 35H, 37H, and 38H of four clusters 17a are extracted from the FAT data 32a.

Next, the controller refers to the FAT 14 (see Fig. 12) managed by the OS to extract all the addresses of recording areas 14a in each of which the release code "00H" (value) is recorded.

Then, the controller evaluates logical product of the addresses extracted in reference to the FAT data 30a and the addresses extracted in reference to the FAT 14.

Herein, the file "No. 1" has already been deleted, so that the OS releases the Fat 14 corresponding to all the addresses of clusters in which the updated data (the latest data) 30, the previous data 31, and the ex-previous data are recorded.

Thus, in the case of execution of the data cleaning operation after the "No. 1" file data is deleted, all the addresses extracted in reference to the respective FAT data 30a, 31a, and 32 of the updated data 30, the previous data 31, and the ex-previous data 32 correspond to the addresses extracted in reference to the FAT 14. Consequently, the predetermined data "00H"s are written over the five clusters 17a with the addresses 01H, 02H, 14H, 15H, and 22H, the four clusters 17a with the addresses 25H, 26H, 2AH, and 2BH, and the four clusters 17a with the addresses 31H, 35H, 37H, and 38H all obtained from logical product of the both addresses. Further, "00H"s (value) are written over also the file names and the cluster chain addresses of the FAT data 30a, 31a, and 32a recorded in the software management area 19.

Specifically, after deletion of a file created by the particular software 18, updated, and stored, the data cleaning operation performs an overwriting operation whereby both all the data and all the FAT data relating to the file are written over, thereby making impossible to read the data.

In this way, the data cleaning program 20 of the present embodiment efficiently writes over data unnecessary for management in a short period of time to make impossible to read the data even in using the particular software 18 that independently records FAT data in the software management area 19. Consequently, that prevents data from being restored and leaked, thereby ensuring security.

Herein, the present embodiment has such a configuration as specifying a name of file created by the particular software 18 to perform the cleaning operation on only the file at the start of the data cleaning operation. However, for example, it is possible to make a wild-card specification of a file name by appending an extension to a file of the particular software 18, so as to simultaneously execute the data cleaning operations on all files created by the software 18.

The embodiments of the present invention are described above, but it is possible to install in a data recording device a data cleaning program having functions of both the data cleaning program shown in Fig. 1 and the data cleaning program 20 shown in Figs. 2 and 3, and whereby a controller runs selectively either one of the programs to perform a data cleaning operation.

The embodiments described above give the example of a hard disk as a data recording medium, but the present invention is not limited to such a configuration. Only if a data recording medium is one managed by being divided into a FAT area and a data area such as a flexible disk, a CD-RW, a DVD-RAM, a DVD-RW, or a MO, the data cleaning program of the present invention effectively prevents unnecessary data from being restored.

Further, the above-mentioned embodiments describe such a configuration that an OS records the FAT 14 in the FAT area, but the data cleaning program 20 of the present invention performs the data cleaning operation even in the case of employment of an OS containing directory data relating file information or a part of data in addition to the FAT.

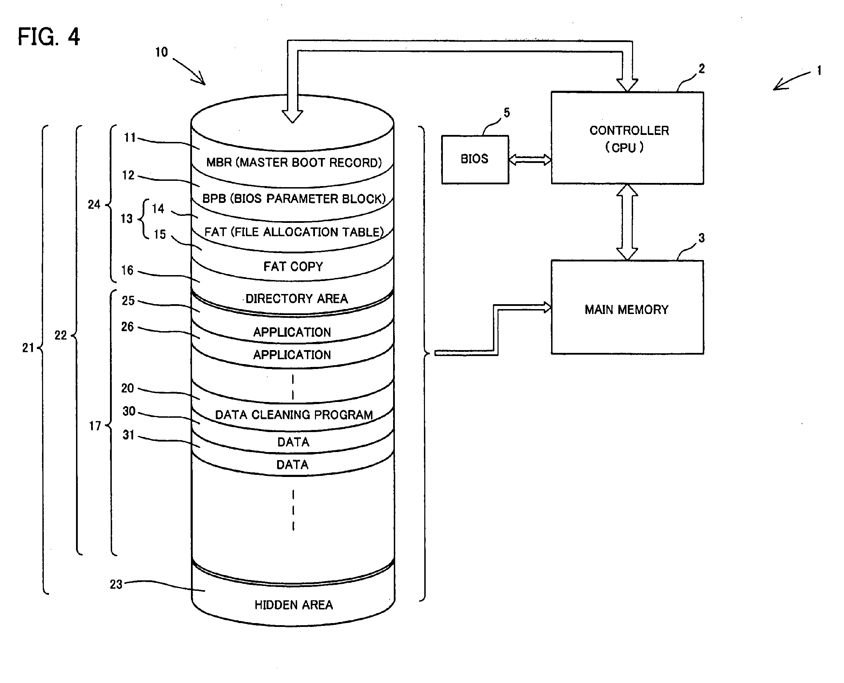

A preferred embodiment for achieving the second object of the present invention will be described below, making reference to Figs. 4 to 7.

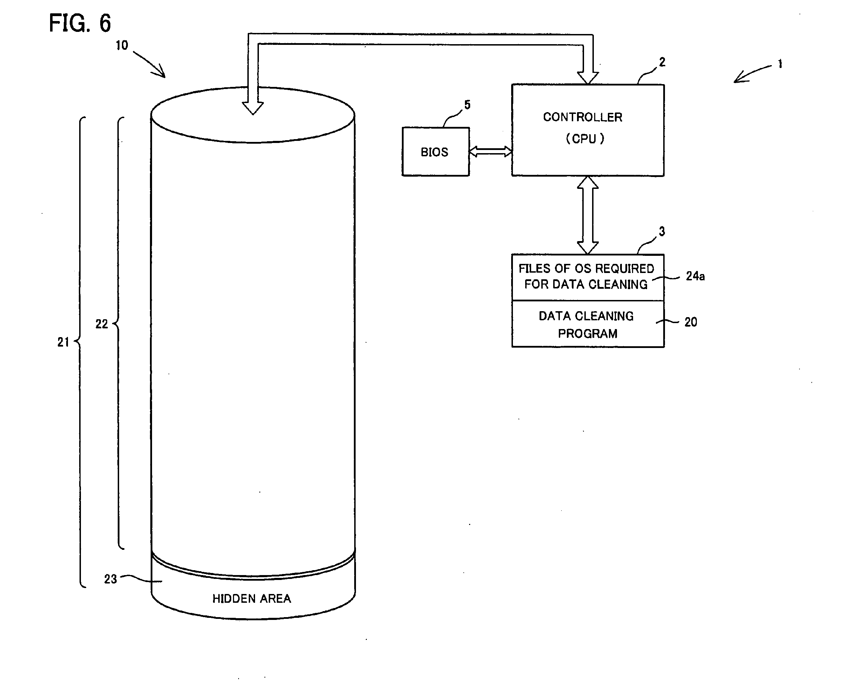

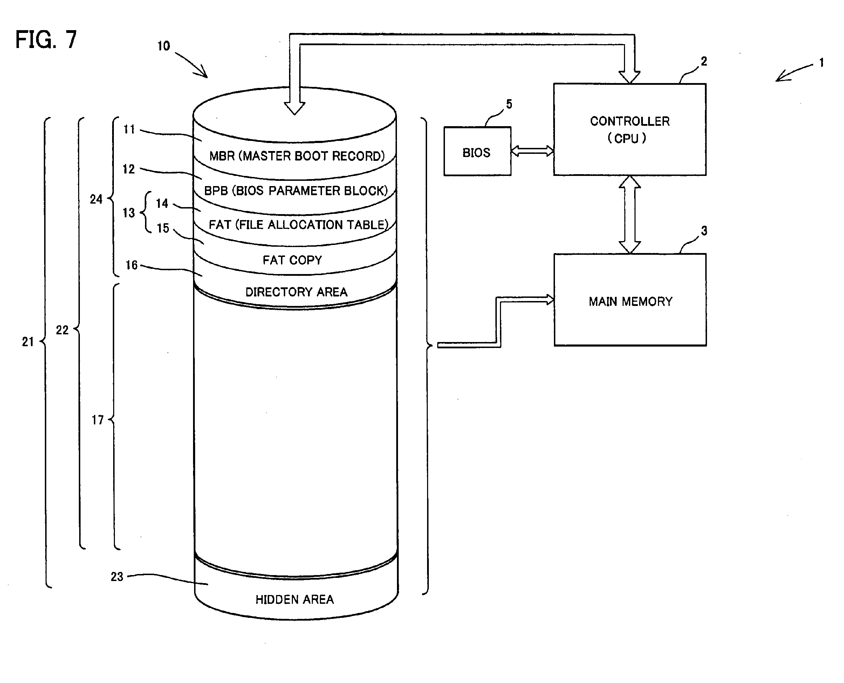

Fig. 4 is a schematic diagram showing an internal configuration of a data processing device containing a data cleaning program relating to an embodiment of the present embodiment. Fig. 5 is a schematic diagram showing processes of a data cleaning operation in specifying all files contained in a data recording medium in the data processing device in Fig. 4. Fig. 6 is a schematic diagram showing a state in which the data cleaning operation shown in Fig. 5 is completed. Fig. 7 is a schematic diagram showing a state in which an OS is reinstalled in the data recording medium on which the data cleaning operation shown in Fig. 6 has been performed.

Herein, in the following description, peripheral equipment such as a display or a keyboard provided in a data processing device 1 are omitted. An OS contained in a hard disk (data recording medium) 10 shall be described as Windows.

Referring to Fig. 4, the data processing device 1 of the present embodiment includes a controller 2 constituted by a central processing unit (CPU), a main memory 3 capable of reading and writing data directly by the controller 2, a hard disk (data recording medium) 10, and a BIOS 5 contained in a nonvolatile memory. The hard disk 10 includes a recording area 21. The recording area 21 is divided into a recording area 22 managed by an installed OS 24 and a hidden area 23 managed by the BIOS 5.

The OS 24 manages the recording area 22 by dividing into a plurality of areas. Specifically, the recording area 22 is divided into a MBR (Master Boot Record) area 11, a BPB (BIOS Parameter Block) area 12, a FAT (File Allocation Table) area 13, a directory area 16, and a data area and managed by the OS 24.

Thus, the recording area 22 is roughly divided into an area (24) containing the OS 24 and the data area 17 containing data.

The MBR area 11 is an area that contains an OS boot program (OS Boot Loader) or a partition table that is location information such as a partition location or a size of the program. The BPB area 12 is an area that contains a FAT for supervising input-output with peripheral equipment and BIOS parameters that constitute data relating to a directory entry.

The FAT area 13 is an area that contains a FAT 14 and a FAT 15, the latter being a copy of the former. The FAT 14 consists of a plurality of recording areas capable of recording address data, each of which area has an address corresponding to a cluster address in the data area 17. Specifically, an address assigned to the recording area in the FAT 14 indicates an address of a cluster chain in the data area 17 in which file data is recorded.

The FAT 15 also consists of the same recording areas as those of the FAT 14. Data is backed up in case of destruction of data in the FAT 14.

The directory area 16 is an area in which file information is contained. The directory area 16 contains on each file recorded on the hard disk information such as a file name, a directory name, an extension, a date and time of creation, a last update date and time, a file size, an entry address, and an attribute that relates to a file.

The data area 17 is an area in which a plurality of applications 25, 26 or a plurality of data 30, 31 are recorded. The data area 17 consists of a plurality of clusters for recording data. An address is assigned to each cluster. In the present embodiment, the data cleaning program 20 is installed in advance in the data area 17 and operates on the OS 24.

The hidden area 23 is an area managed by the BIOS 5 and has an installing program for installing the OS 24 and other necessary files recorded therein. The BIOS 5 is run when the data processing device 1 is run. Further, the BIOS 5 installs the OS 24 when the OS 24 is not contained in the area (24) in the hard disk 10.

In the data processing device 1, when the application 25 is to be executed, for example, an operator is to input a command to direct the OS 24 to run the application 25. Upon inputting of the command in the data processing device 1, the controller 2 refers to the directory area 16 and the FAT 14 to specify the data area 17 containing the application 25, thereby starting an operation according to a program of the application 25 recorded in the data area 17. In this case, the controller loads the application 25 into the main memory 3 as needed to execute the operation.

Then, according to the program of the application 25, a result of the operation is shown in the display or recorded in the hard disk 10.

In the case of execution of the other application 26 or the data cleaning program 20, an operation is performed in a similar manner.

Next, in the data processing device 1, processes of a data cleaning operation in specifying all files contained in the hard disk 10 to be deleted will be described below, making reference to Figs. 4 to 7.

An execution method of the data cleaning program 20 has no difference from that of another application in Windows (the OS).

Not shown, but it is preferable to, for example, put on a desktop (display) an icon (a shortcut icon) for file specification of the data cleaning program 20 so as to facilitate executing the program 20 of the present embodiment.

Then, a file displayed by a file list (explorer) of Windows or a folder including a plurality of files is moved onto the icon by an input interface such as a mouse, so that the program 20 is run with the moved file specified as an object file for the cleaning operation.

Referring to Fig. 4, being run with all files recorded in the hard disk 10 moved onto the icon, the data cleaning program 20 recognizes that the specified files include the OS 24 and the program 20 itself According to the program 20, as shown in Fig. 5, the controller 2 saves (duplicates) a part of file 24a required for the cleaning operation in the OS 24 and the program 20 itself in the main memory 3. Then, the program 20 and the OS 24a saved in the main memory 3 continue the following operation.

Thereafter, the controller 2 refers to the OS 24a saved in the main memory 3 and follows the program 20 saved in the main memory 3 as well, so as to sequentially write predetermined data "00H"s over corresponding clusters (recording areas) in the hard disk 10 in which all files including the OS 24 and the program 20 are recorded in the recording area 22 except the hidden area 23.

At this time, during overwriting operation, the OS 24 or the program 20 itself contained in the recording area 22 is sequentially written over and erased. However, at the time of overwriting and erasure, the overwriting operation is performed by the OS 24a and the program 20 saved in the main memory 3. Thus, even when the OS 24 or the program 20 itself contained in the hard disk 10 is written over and erased, the overwriting operation is not interrupted and never freeze.

The above-mentioned operation, as shown in Fig. 6, writes the predetermined data "00H"s over data of all the files contained in the recording area 22 in the hard disk 10, thereby completing the cleaning operation. As a result, the recording area 22 in the hard disk is completely erased and only data in the hidden area 23 still remains.

Herein, the present embodiment writes "00H" over the recording area 22, but may write desired data such as "FFH" or "E5H". Further, writing these plurality of data more than once prevents remaining unnecessary data from being read more completely.

In the next place, when the data processing device 1 is reset or restarted in a state shown in Fig. 6, the controller 2 runs the BIOS 5 so as to inquire the operator whether to install an OS or not, because the OS 24 no longer exists in the recording area 22 in the hard disk.

Herein, reset or restart of the data processing device 1 erases the file 24a or the data cleaning program 20 saved in the main memory 3.

If and when the operator directs to install the OS 24 in answer to the inquiry, the controller 2 run an installing program contained in the hidden area 23 to install the OS 24 in the recording area 22 in the hard disk 10 as shown in Fig. 7. The above-mentioned operation completes reinstallation of the OS 24, so that only the OS 24 is contained in the recording area 22 in the hard disk 10.

At this time, installing programs of the OS 24 and other applications may be recorded in the hidden area 23, and whereby the OS 24 and the applications are reinstalled. The operator is allowed to practice the data processing device 1 immediately after reinstallation.

In this way, the data cleaning program 20 of the present embodiment specifies all files contained in the hard disk 10, thereby making all the files recorded in the recording area 22 to be written over and erased without erasing data or programs in the hidden area. Or, the hard disk 10 can be readily restored to an initial condition in which only the OS 24 (or the OS 24 and other applications) is installed therein by means of an installing function of the OS 24 in the hidden area 23.

Further, the area in which a file is recorded is written over and erased, and thus original data is secure from restoration even by using particular analysis software, ensuring security.

Still further, according to a configuration of the present embodiment, the hidden area 23 is provided with an installing function of the OS 24, dispensing with a recovery disk of the OS 24, achieving cost saving and no need for management of the recovery disk.

Now, in the data processing device 1, a cleaning operation in the case of specifying all files except the OS 24 contained in the hard disk 10 will be described below.

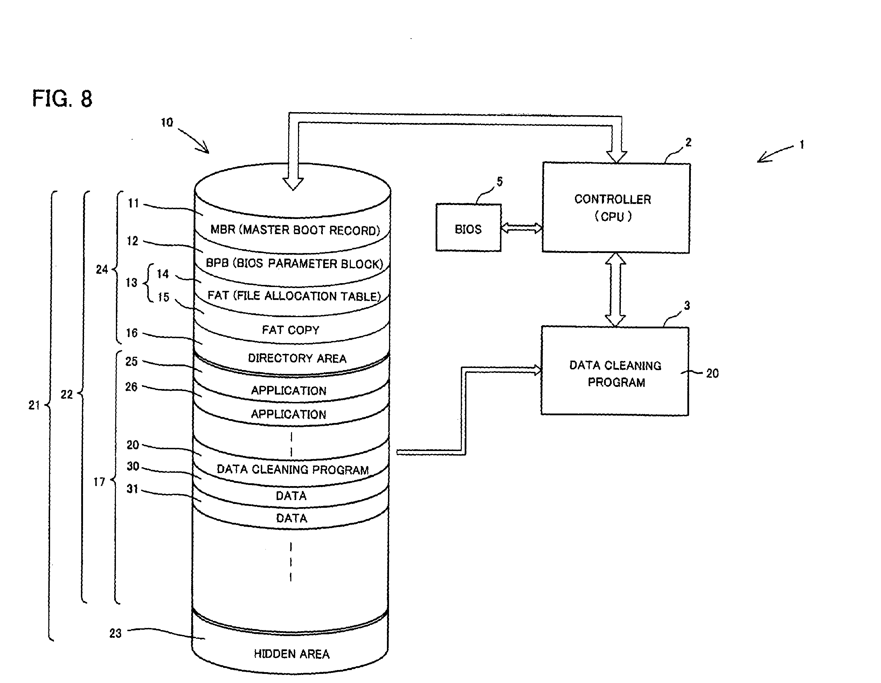

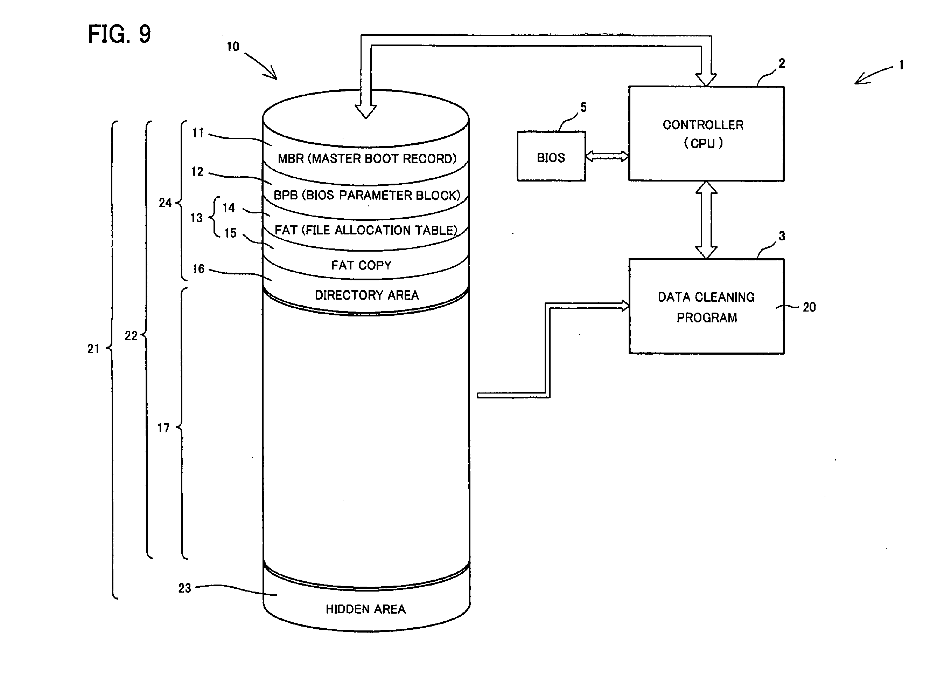

Fig. 8 is a schematic diagram showing processes of a data cleaning operation in specifying all other files except the OS 24 in the data processing device 1 in Fig. 4. Fig. 9 is a schematic diagram showing a state in which the data cleaning operation shown in Fig. 8 is completed.

Referring to Fig.4, all other files including the data cleaning program 20 except the OS 24 recorded in the recording area 22 are moved onto the icon for file specification and the program 20 is run.

Or, the program 20 is run by an operation such as double clicking of the icon. Then, all other files including the program 20 are selected from a file selection menu of the program 20.

The program 20 recognizes that the specified files include the program 20 itself. According to the program 20, as shown in Fig. 8, the controller 2 saves (duplicates) the program 20 itself in the main memory 3. The program 20 saved in the main memory 3 continue the following operation.

Thereafter, the controller 2 refers to the OS 24 contained in the recording area 22 and executes the program 20 saved in the main memory 3, so as to sequentially write predetermined data "00H"s over clusters (recording areas) containing the specified files in the data area 17 except the hidden area 23. In this case, the hidden area 23 is not written over, as well.

At this time, during an overwriting operation, the program 20 contained in the data area 17 is written over and erased. However, at the time of overwriting and erasure, the overwriting operation is performed by the program 20 saved in the main memory 3. Thus, even when the program 20 contained in the hard disk 10 is written over and erased, the overwriting operation (cleaning operation) is not interrupted and never freeze.

The controller 2 further deletes the specified files (the overwritten files) from the management of the OS 24. Specifically, as well as in the case of deletion of the files by the OS 24, data in the directory area 16 of the overwritten files is deleted and the FATs 14 and 15 of the files are released (written over with "00H"s).

The above-mentioned operation sequentially writes the predetermined data "00H"s over the recording areas containing the specified files in the data area 17 except the area (24) containing the OS 24 in the hard disk 10, thereby completing the cleaning operation.

Upon completion of the data cleaning operation, as shown in Fig. 9, the hard disk 10 is restored to an initial condition having the recording area 21 including therein the recording area 22 containing only the OS 24 and the hidden area 23. As the OS 24 exists, it is not necessary to reinstall the OS 24.

In the above-mentioned description, "00H" is written over an object file for the cleaning operation, but desired data such as "FFH" or "E5H" may be written. Further, it is also possible to write single data more than once, or to write desired combination of these data.

When the data cleaning operation is executed on all files specified except the OS 24, as shown in Fig. 9, only the OS 24 still remains in the recording area 22. Thus, reset or restart of the data processing device 1 immediately run the OS 24.

However, a number of files constituting the OS 24 include a file stably workable alone and a file workable in conjunction with software such as a device driver not included in the OS 24. Thus, if and when all the software such as the device driver not included in the OS 24 are erased by the operation shown in Figs. 8 and 9, the OS 24 might work unstably.

In such a case, it is only necessary to install the OS 24 in the recording area 22 by using the installing function of the hidden area 23 according to the procedures shown in Fig. 7, after overwriting and erasure of data in the recording area 22 with all the files contained in the hard disk 10 specified according to the procedures shown in Figs. 5 and 6. That ensures stable working of the OS 24.

Now, in the data processing device 1, a cleaning operation in the case of specifying all other files except the OS 24 and the data cleaning program 20 among files contained in the hard disk 10 will be described below.

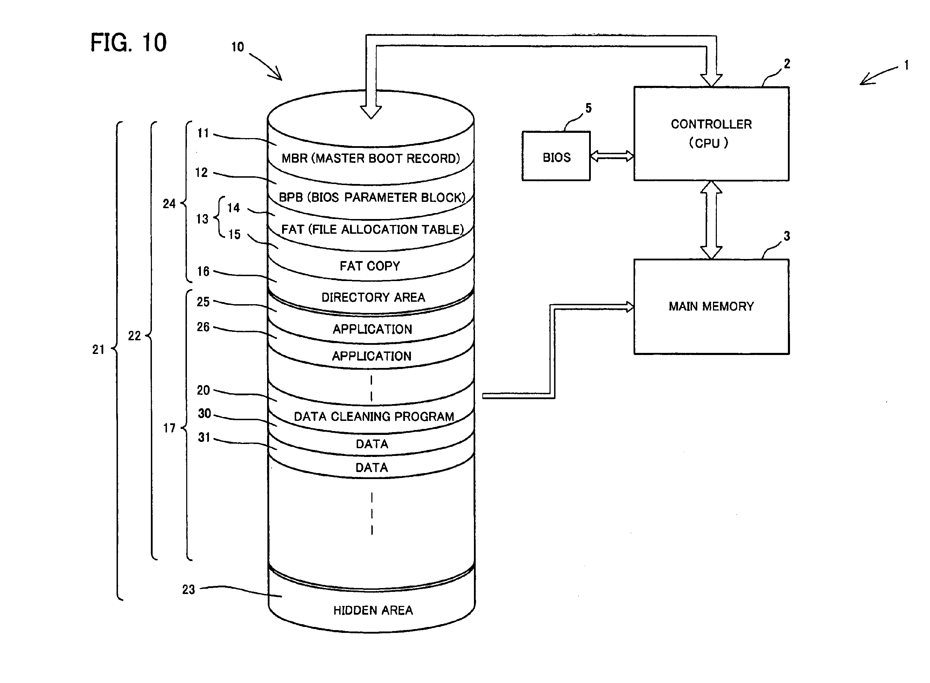

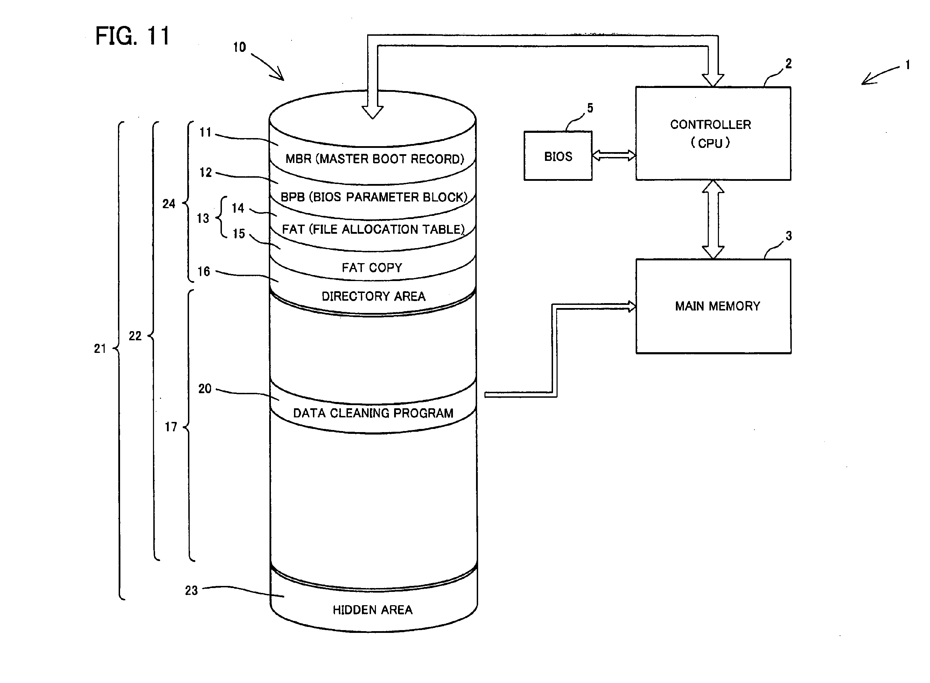

Fig. 10 is a schematic diagram showing processes of a data cleaning operation in specifying all other files except the OS 24 and the data cleaning program 20 of the present invention. Fig. 11 is a schematic diagram showing a state in which the data cleaning operation shown in Fig. 10 is completed.

Referring to Fig.4, except the OS 24 and the data cleaning program 20 contained in the hard disk 10, all the other applications 20, 21 and data 30, 31 are moved onto the icon for file specification and the program 20 is run. The program 20 recognizes that the specified files do not include both the OS 24 and the program 20.

Then, the controller 2, not saving any file in the main memory 3, refers to the OS 24 contained in the recording area 22 to follow the program 20 contained in the data area 15, so as to sequentially write predetermined data "00H"s over clusters (recording areas) containing the specified files among recording areas (the data area) 17 except the hidden area 23. In this case, the hidden area 23 is not written over, as well.

The controller 2 further deletes the specified files (the overwritten files) from the management of the OS 24. Specifically, as well as in the case of deletion of the files by the OS 24, data in the directory area 16 of the overwritten files is deleted and the FATs 14 and 15 of the files are released (written over with "00H"s).

The above-mentioned operation writes the predetermined data "00H"s over the recording areas containing the specified files in the data area 17 in the hard disk 10, thereby completing the cleaning operation.

Upon completion of the data cleaning operation, as shown in Fig. 11, the recording area 22 containing only the OS 24 and the data cleaning program 20 and the hidden area 23 exist in the hard disk 10. The above-mentioned operation makes the hard disk 10 to be restored to an initial condition with the hard disk 10 containing the program 20. Additionally, it is not necessary to reinstall the OS 24.

In the above-mentioned description, "00H" (value) is written over the data area 17, but desired data such as "FFH" (value) or "E5H" (value) may be written, or it is also possible to write desired combination of these data more than once.

In the case, as shown in Fig. 11, that only the OS 24 and the program 20 remain in the hard disk by the data cleaning operation, as well as in the case described in Fig. 9, the OS 24 might work unstably.

In such a case, as described above, it is only necessary to reinstall the OS 24 in the recording area 22 by using the installing function of the hidden area 23 (see Fig. 7), after overwriting and erasure of data in the recording area 22 with all the files contained in the hard disk 10 specified (see Figs. 5 and 6). That ensures stable working of the OS 24.

Or, the OS 24 may be overwritten and installed with the OS 24 remaining in the hard disk 10.

The embodiment of the present invention is described above, but the data processing device 1 containing the data cleaning program 20 of the present invention is not limited to the configuration shown in Fig. 4.

Specifically, the hidden area 23 in the hard disk 10 is managed by the BIOS 5 of the data processing device 1 in the configuration shown in Fig. 4, but may be managed by a BIOS (not shown) provided in the hard disk 10.

Further, it is possible to employ a configuration as managing the hidden area 23 by the OS (Windows). This configuration makes possible that Windows contained in the hidden area 23 or Windows contained in another drive in the partitioned hard disk 10 manages the hidden area 23.

Further, it is possible to have the hard disk 10 without the hidden area 23, though the above-mentioned embodiment has the hard disk 10 provided with the hidden area 23.

Even in a configuration not provided with the hidden area 23 in the hard disk 10, execution of the data cleaning operation in specifying all other files except the OS 24 contained in the hard disk 10 makes the OS 24 to remain in the hard disk 10. Consequently, it is possible to restore the hard disk 10 to an initial condition to immediately use it.

In the case that the hard disk 10 is not provided with the hidden area 23, the data cleaning operation in specifying all files contained in the hard disk 10 erases the OS 24. Thus, it is preferable to attach an installing disk (recovery disk) for reinstalling the OS 24.

Still further, the above-mentioned embodiment illustrates by an example in the case of overwriting and erasure of all files in the hard disk, in the case of overwriting and erasure of other files except the OS 24, or in the case of all other files except the OS 24 and the data cleaning program 20. However, the data cleaning program 20 of the present invention writes over and erases only the OS 24 or only the program 20.

Yet further, the above-mentioned embodiment illustrates by an example of Windows as the OS 24 contained in the hard disk (data recording medium) 10, but it is also possible to employ MS-DOS, MacOS, or Linux as well as Windows.

### INDUSTRIAL APPLICABILITY

The present invention is applicable for reuse of a data recording medium or a data processing device provided with a data recording medium.

## Claims

1. A data cleaning program to be contained in a data processing device having a data recording medium and a controller for access control over the data recording medium,
wherein the data recording medium is controlled by the controller by being divided into a data area and a FAT area,
the data area having a plurality of clusters in which file data is to be recorded and being adapted to have the file data recorded in one cluster or distributedly among a plurality of clusters,
the FAT area having a plurality of recording areas with addresses specifying the clusters,
each of the recording areas being adapted to have one selected from the following and recorded therein: (a) an address of a cluster in a cluster chain in which data contiguous to a file data recorded in a cluster corresponding to the recording area is recorded and (b) a release code, and
the program being adapted to refer to the FAT area to extract addresses of all recording areas in which the release codes are recorded, so as to sequentially overwrite clusters corresponding to the extracted addresses with predetermined data.

2. A data cleaning program to be contained in a data processing device having a data recording medium and a controller for access control over the data recording medium,
wherein the data recording medium is controlled by the controller by being divided into a data area and a FAT area,
the data area having a plurality of clusters in which file data is to be recorded and being adapted to have the file data recorded in one cluster or distributedly among a plurality of clusters,
the FAT area having a plurality of recording areas with addresses specifying the cluster,
each of the recording areas being adapted to have one selected from the following and recorded therein: (a) an address of a cluster in a cluster chain in which data contiguous to a file data recorded in a cluster corresponding to the recording area is recorded and (b) a release code,
the data area further containing a particular software,
wherein the particular software is adapted to reserve a part of the data area as a software management area, and in storing of a created file, to record updated data of the file in the data area with separating from previous data and to record FAT data indicating the clusters in which the updated data and all the previous data relating to the file are recorded in the software management area as well, and
the program being adapted to specify a file created by the particular software to extract addresses of all clusters in which data relating to the file is recorded in reference to the FAT data recorded in the software management area and to extract addresses of all recording areas in which the release codes are recorded in reference to the FAT area, so as to sequentially perform overwriting operations in each of which predetermined data is written over clusters with addresses corresponding to logical product of the both extracted addresses.

3. The data cleaning program as defined in claim 2,
being adapted to write the predetermined data over FAT data corresponding to the clusters on which the overwriting operation is performed among the FAT data recorded in the software management area.

4. A data cleaning program provided with operating functions of both the data cleaning program as defined in claim 1 and the data cleaning program as defined in claim 2 or 3,
being adapted to selectively execute either one of the programs by the controller.

5. The data cleaning program as defined in one of claims 1 to 4,
being adapted to perform the overwriting operation by repeating a predetermined number of writing of same data or various data over the clusters.

6. The data cleaning program as defined in one of claims 1 to 5,
wherein the data recording medium is a hard disk.

7. The data cleaning program as defined in one of claims 1 to 6,
being adapted to automatically run to start cleaning operation by the controller either at a predetermined time or on condition that another operation has not been continuously performed for a predetermined period of time.

8. A data cleaning program to be contained in a data processing device having a data recording medium and a controller for access control over the data recording medium by an operating system,
the program being adapted to operate on the operating system,
the program and the system being contained in the data recording medium, and
the program being adapted to save by the controller at least one selected from a part of files of the operating system required for cleaning operation and the data cleaning program itself into a main memory when a file contained in the data recording medium is specified, depending on the specified file,
so as to perform overwriting operation whereby predetermined data is sequentially written over a corresponding recording area in which the specified data is contained in the data recording medium according to the data cleaning program in either the data recording medium or the main memory in reference to the operating system in either the data recording medium or the main memory, and
so as to perform deletion operation whereby the overwritten file is deleted from the management of the operating system when the operating system is not included in the specified file.

9. The data cleaning program as defined in claim 8,
being adapted to specify all files contained in the data recording medium, and
being adapted to save by the controller a part of files of the operating system required for cleaning operation and the data cleaning program itself in the main memory when all the files are specified,
so as to perform the overwriting operation according to the data cleaning program saved in the main memory in reference to the operating system saved in the main memory.

10. The data cleaning program as defined in claim 9,
wherein the controller is adapted to unprotect files constituting the operating system.

11. The data cleaning program as defined in one of claims 8 to 10,
being adapted to specify, except the operating system among the files contained in the data recording medium, one file selected from (a) the data cleaning program and (b) the data cleaning program and other software and/or data, and
being adapted to save by the controller the data cleaning program itself in the main memory when the corresponding file is specified, so as to perform the overwriting operation according to the data cleaning program saved in the main memory in reference to the operating system contained in the medium.

12. The data cleaning program as defined in one of claims 8 to 11,
being adapted to specify, except the operating system and the data cleaning program among the files contained in the data recording medium, at least one file selected from the other software and the data, and
being adapted to perform the overwriting operation by the controller according to the data cleaning program contained in the medium in reference to the operating system contained in the medium when the corresponding file is specified.

13. The data cleaning program as defined in one of claims 8 to 12,
wherein the data recording medium comprises a hidden area managed by the operating system or a BIOS,
the hidden area having an installing function of the operating system and being protected from being overwritten by the data cleaning program.

14. The data cleaning program as defined in one of claims 8 to 13,
being adapted to perform the overwriting operation by repeating a predetermined number of writing of same data or various data over the clusters.

15. The data cleaning program as defined in one of claims 8 to 14,
wherein the data recording medium is a hard disk.

16. A data cleaning program to be contained in a data processing device,
wherein the data processing device comprises a data recording medium and a controller for access control over the data recording medium,
wherein the data recording medium is controlled by the controller by being divided into a data area and a FAT area,
the data area having a plurality of clusters in which file data is to be recorded and being adapted to have the file data recorded in one cluster or distributedly among a plurality of clusters,
the FAT area having a plurality of recording areas with addresses specifying the clusters,
each of the recording areas being adapted to have one selected from the following and recorded therein: (a) an address of a cluster in a cluster chain in which data contiguous to a file data recorded in a cluster corresponding to the recording area is recorded and (b) a release code, and
the program being adapted to refer to the FAT area to extract addresses of all recording areas in which the release codes are recorded, so as to overwrite clusters corresponding to the extracted addresses with desired dummy data.

17. A data cleaning program to be contained in a data processing device,
wherein the data processing device comprises a data recording medium and a controller for access control over the data recording medium,
wherein the data recording medium is controlled by the controller by being divided into a data area and a FAT area,
the data area having a plurality of clusters in which file data is to be recorded and being adapted to have the file data recorded in one cluster or distributedly among a plurality of clusters,
the FAT area having a plurality of recording areas with addresses specifying the clusters, each of the recording areas being adapted to have one selected from the following and recorded therein: (a) an address of a cluster in a cluster chain in which data contiguous to a file data recorded in a cluster corresponding to the recording area is recorded and (b) a release code,
the data area further containing a particular software,
wherein the particular software is adapted to reserve a part of the data area as a software management area, and in storing of a created file, to record the most updated data of the file in the data area with separating from previous data and to record FAT data indicating the clusters in which the most updated data and all the previous data relating to the file are recorded in the software management area as well, and
the program being adapted to specify file data created by the particular software to extract addresses of all clusters in which data relating to the file is recorded in reference to the FAT data recorded in the software management area and to extract addresses of all recording areas in which the release codes are recorded in reference to the FAT area, so as to perform an overwriting operation in which desired dummy data is written over clusters with addresses corresponding to logical product of the both extracted addresses.

18. A data cleaning program to be contained in a data processing device,
wherein the data processing device comprises a data recording medium and a controller for access control over the data recording medium by an operating system,
the program being adapted to operate on the operating system,
the program and the system being contained in the data recording medium, and
the program being adapted to save at least one selected from a part of files of the operating system required for data cleaning operation and the data cleaning program into a main memory when a file contained in the data recording medium is specified to be cleaned so as to prevent the data processing device from stopping during the data cleaning operation,
so that the data cleaning operation is performed by one selected from the part of files of the operating system required for the cleaning operation and the data cleaning program saved in the main memory.
